(19) Europäisches Patentamt
European Patent Office
Office européen des brevets

(11) **EP 4 582 797 A1**

(12) **EUROPEAN PATENT APPLICATION**
published in accordance with Art. 153(4) EPC

(43) Date of publication:
**09.07.2025 Bulletin 2025/28**

(21) Application number: **23879620.5**

(22) Date of filing: **04.10.2023**

(51) International Patent Classification (IPC):
**G01N 27/26** *(2006.01)*    **G01N 27/416** *(2006.01)*

(52) Cooperative Patent Classification (CPC):
**G01N 27/26; G01N 27/416**

(86) International application number:
**PCT/JP2023/036273**

(87) International publication number:
**WO 2024/084973 (25.04.2024 Gazette 2024/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.10.2022 JP 2022167124**

(71) Applicant: **PHC HOLDINGS CORPORATION
Tokyo 100-8403 (JP)**

(72) Inventors:
• **TAIRA, Keisuke
  Toon-shi Ehime 791-0395 (JP)**
• **INOUE, Takahiro
  Toon-shi Ehime 791-0395 (JP)**
• **SAWAMURA, Kanae
  Toon-shi Ehime 791-0395 (JP)**

(74) Representative: **Grünecker Patent- und
Rechtsanwälte
PartG mbB
Leopoldstraße 4
80802 München (DE)**

(54) **INFORMATION PROCESSING DEVICE AND INFORMATION PROCESSING METHOD**

(57)    A control device 4 is connected to a sensor module in which a plurality of electrochemical sensors that measures a value regarding a concentration of a predetermined component in each of an inspection well and a correction well is integrally formed. The control device 4 acquires values measured by the electrochemical sensors in the inspection well and the correction well at the time of calibration, and acquires values measured by the electrochemical sensors in the inspection well and the correction well at the time of actual measurement after the calibration. The control device 4 generates the calibration curve at the time of the actual measurement on the basis of the values measured in the inspection well and the correction well at the time of the calibration and the value measured in the correction well at the time of the actual measurement. The control device 4 derives the concentration of the component in the inspection well at the time of the actual measurement on the basis of the value measured in the inspection well at the time of the actual measurement and the calibration curve at the time of the actual measurement.

FIG. 15

**Description**

TECHNICAL FIELD

The present disclosure relates to a data processing technology, and especially relates to an information processing device and an information processing method.

BACKGROUND ART

In a case of measuring a state of a chemical reaction such as glucose metabolism, an electrochemical sensor is sometimes used. The electrochemical sensor has a feature of changing in sensitivity over time under an influence of a measurement environment and a storage environment.

Therefore, there has been a case where a correction coefficient for reflecting the change in sensitivity over time is obtained in advance, and a calibration curve indicating a relationship between a measurement value of a predetermined physical quantity by an electrochemical sensor and a concentration of a predetermined component is corrected by the correction coefficient (refer to, for example, Patent Literature 1).

RELATED-ART LITERATURE

PATENT LITERATURE

Patent Literature 1: JP 7-110333

SUMMARY OF INVENTION

TECHNICAL PROBLEM

A degree of a change in sensitivity of an electrochemical sensor varies depending on an environment, but enormous verification is required to prepare correction coefficients corresponding to various environments in advance.

The present disclosure has been made in view of such problems, and an object thereof is to provide a technology for improving accuracy of measurement over a long period of time using an electrochemical sensor.

SOLUTION TO PROBLEM

In order to solve the above-described problem, an information processing device according to an aspect of the present disclosure is a device connected to a sensor module in which a plurality of electrochemical sensors each structured to measure a value regarding a concentration of a predetermined component in each of an inspection well and a correction well is integrally formed, the device including a sensor value acquirer structured to acquire a value measured by each of the electrochemical sensors in each of the inspection well and the correction well at the time of calibration in which the concentration of the component in the inspection well is known, and acquire a value measured by the electrochemical sensor in each of the inspection well and the correction well at the time of actual measurement in which the concentration of the component in the inspection well is unknown after the calibration, a calibration curve generator structured to generate, on the basis of the value measured in each of the inspection well and the correction well at the time of the calibration and the value measured in the correction well at the time of the actual measurement, a calibration curve at the time of the actual measurement indicating a relationship between the measured value by the electrochemical sensor and the concentration of the component and a concentration deriver structured to derive the concentration of the component in the inspection well at the time of the actual measurement on the basis of the value measured in the inspection well at the time of the actual measurement and the calibration curve at the time of the actual measurement.

Another aspect of the present disclosure is also an information processing device. The device is a device connected to a sensor module in which a plurality of electrochemical sensors each structured to measure a value regarding a concentration of a predetermined component in each of an inspection well and a correction well is integrally formed, the device including a sensor value acquirer structured to acquire a value measured by each of the electrochemical sensors in each of the inspection well and the correction well at the time of calibration in which the concentration of the component in the inspection well is known, and acquire a value measured by the electrochemical sensor in each of the inspection well and the correction well at the time of actual measurement in which the concentration of the component in the inspection well is unknown after the calibration, a calibration curve generator structured to generate, on the basis of the value measured in the inspection well at the time of the calibration, an initial calibration curve indicating a relationship between the measured value by the electrochemical sensor and the concentration of the component, a correction coefficient deriver structured to derive a correction coefficient regarding a change in sensitivity of the electrochemical sensor with a lapse of time from the time of the calibration to the time of the actual measurement on the basis of the value measured in the correction well at the time of the calibration and the value measured in the correction well at the time of the actual measurement, and a concentration deriver structured to derive a concentration of the component in the inspection well at the time of the actual measurement on the basis of a value obtained by correcting the value measured in the inspection well at the time of the actual measurement on the basis of the correction coefficient and the initial calibration curve.

Still another aspect of the present disclosure also is an information processing method. In this method, a device connected to a sensor module in which a plurality of electrochemical sensors each structured to measure a value regarding a concentration of a predetermined component in each of an inspection well and a correction well is integrally formed executes steps of acquiring a value measured by each of the electrochemical sensors in each of the inspection well and the correction well at the time of calibration in which the concentration of the component in the inspection well is known, and acquiring a value measured by the electrochemical sensor in each of the inspection well and the correction well at the time of actual measurement in which the concentration of the component in the inspection well is unknown after the calibration, generating, on the basis of the value measured in each of the inspection well and the correction well at the time of the calibration and the value measured in the correction well at the time of the actual measurement, a calibration curve at the time of the actual measurement indicating a relationship between the measured value by the electrochemical sensor and the concentration of the component, and deriving the concentration of the component in the inspection well at the time of the actual measurement on the basis of the value measured in the inspection well at the time of the actual measurement and the calibration curve at the time of the actual measurement.

Yet another aspect of the present disclosure also is an information processing method. In this method, a device connected to a sensor module in which a plurality of electrochemical sensors each structured to measure a value regarding a concentration of a predetermined component in each of an inspection well and a correction well is integrally formed executes steps of acquiring a value measured by each of the electrochemical sensors in each of the inspection well and the correction well at the time of calibration in which the concentration of the component in the inspection well is known, and acquiring a value measured by the electrochemical sensor in each of the inspection well and the correction well at the time of actual measurement in which the concentration of the component in the inspection well is unknown after the calibration, generating, on the basis of the value measured in the inspection well at the time of the calibration, an initial calibration curve indicating a relationship between the measured value by the electrochemical sensor and the concentration of the component, deriving a correction coefficient regarding a change in sensitivity of the electrochemical sensor with a lapse of time from the time of the calibration to the time of the actual measurement on the basis of the value measured in the correction well at the time of the calibration and the value measured in the correction well at the time of the actual measurement, and deriving a concentration of the component in the inspection well at the time of the actual measurement on the basis of a value obtained by correcting the value measured in the inspection well at the time of the actual measurement on the basis of the correction coefficient and the initial calibration curve.

Note that, any combination of the aforementioned components, and an expression of the present disclosure converted between a system, a computer program, and a recording medium recording the computer program may also be effective as an aspect of the present disclosure.

ADVANTAGEOUS EFFECTS OF INVENTION

According to the technology of the present disclosure, it is possible to improve the accuracy of measurement over a long period of time using an electrochemical sensor.

BRIEF DESCRIPTION OF DRAWINGS

[Fig. 1] Fig. 1 is a graph illustrating a procedure of measurement using an electrochemical sensor.
[Fig. 2] Fig. 2 is a graph illustrating an example of a calibration curve.
[Fig. 3] Fig. 3 is a table illustrating an example of conditions that affect a change in sensitivity of the electrochemical sensor over time, and an example of explanatory variables corresponding to the respective conditions.
[Fig. 4] Fig. 4 is a diagram illustrating a configuration of an analysis system of a first embodiment.
[Fig. 5] Fig. 5 is a diagram illustrating an external appearance of a detector of Fig. 4.
[Fig. 6] Fig. 6 is a diagram illustrating an adapter unit of Fig. 5 in detail.
[Fig. 7] Fig. 7 is a diagram illustrating a setting example of a well plate of Fig. 5.
[Fig. 8] Fig. 8 is a block diagram illustrating a functional block of a control device of the first embodiment.
[Fig. 9] Fig. 9 is a diagram illustrating an example of a blank information input screen.
[Fig. 10] Fig. 10 is a diagram illustrating an example of a blank arrangement screen.

[Fig. 11] Fig. 11 is a diagram illustrating an example of a group information input screen.

[Fig. 12] Fig. 12 is a diagram illustrating an example of the group arrangement screen.

[Fig. 13] Fig. 13 is a graph illustrating an example of measurement results used for generating an initial calibration curve.

[Fig. 14] Fig. 14 is a graph illustrating an example of the initial calibration curve.

[Fig. 15] Fig. 15 is a graph illustrating an example of measurement results used for generating an actual measurement time calibration curve.

[Fig. 16] Fig. 16 is a graph illustrating an example of the actual measurement time calibration curve.

[Fig. 17] Fig. 17 is a graph illustrating an example of measurement results by a plurality of blank REFs and a plurality of blank BKGs.

[Fig. 18] Fig. 18 is a graph illustrating an example of measurement results used for deriving a correction coefficient.

[Fig. 19] Fig. 19 is a graph illustrating an example of the actual measurement time calibration curve.

[Fig. 20] Fig. 20 is a block diagram illustrating a functional block of a control device of a third embodiment.

[Fig. 21] Fig. 21 is a graph illustrating an example of deriving a glucose concentration from a measurement value of a sensor.

[Fig. 22] Fig. 22 is a graph illustrating an example of transition in time series of a glucose response value.

[Fig. 23] Fig. 23 is a graph illustrating an example of transition in time series of a lactic acid response value.

## DESCRIPTION OF EMBODIMENTS

The present disclosure is hereinafter described on the basis of preferred embodiments with reference to the drawings. The embodiments are not intended to limit the present disclosure but serve as an example, and all features described in the embodiments and combinations thereof are not necessarily essential to the present disclosure. The same or equivalent components, members, and processes illustrated in the drawings are assigned with the same reference sign, and description thereof is not repeated appropriately. The scale and shape of each part illustrated in each drawing are conveniently set in order to facilitate the description, and are not limitedly interpreted unless otherwise specified. In a case where the terms "first", "second" and the like are used in the present specification or claims, unless otherwise specified, these terms do not represent any order or importance, and are intended to distinguish one configuration from another configuration. Some members not important for describing the embodiment in each drawing are omitted.

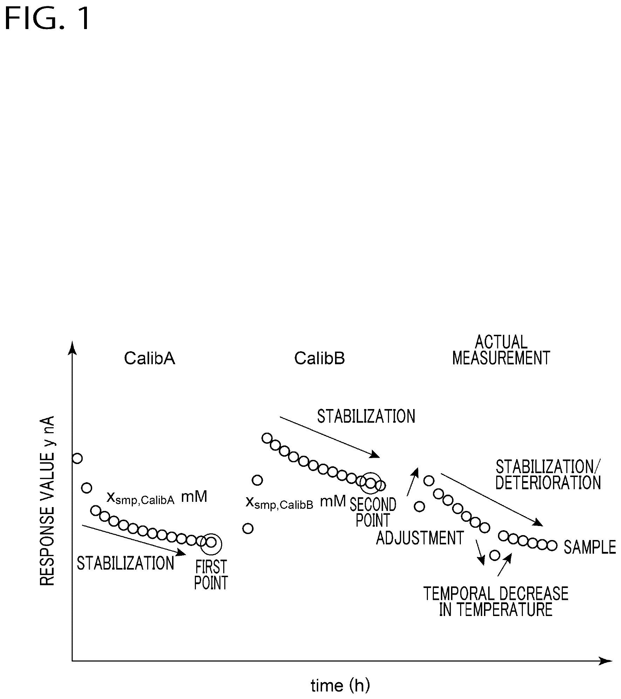

An outline of an embodiment will be described. In order to measure a state of a chemical reaction such as glucose metabolism, an electrochemical sensor (hereinafter, referred to as an "electrochemical sensor") is sometimes used. Fig. 1 illustrates a procedure of measurement using the electrochemical sensor. In Fig. 1, a lapse of time is plotted along the horizontal axis, and a response value, which is a value measured by the electrochemical sensor, is plotted along the vertical axis. The response value of the electrochemical sensor is a current value corresponding to a concentration of a predetermined component (for example, glucose and the like).

Calibration is a work of obtaining a relationship between a known concentration of a predetermined component and the response value measured by the electrochemical sensor. Conventionally, in each of calibration A, which is first calibration, and calibration B, which is second calibration, the response value after stabilization has been measured. After the calibration B, actual measurement of measuring the concentration of the predetermined component a plurality of times is performed. In the actual measurement, the concentration of the predetermined component is unknown, and the concentration of the component described above is measured a plurality of times using a calibration curve based on the response values measured in the calibration A and calibration B.

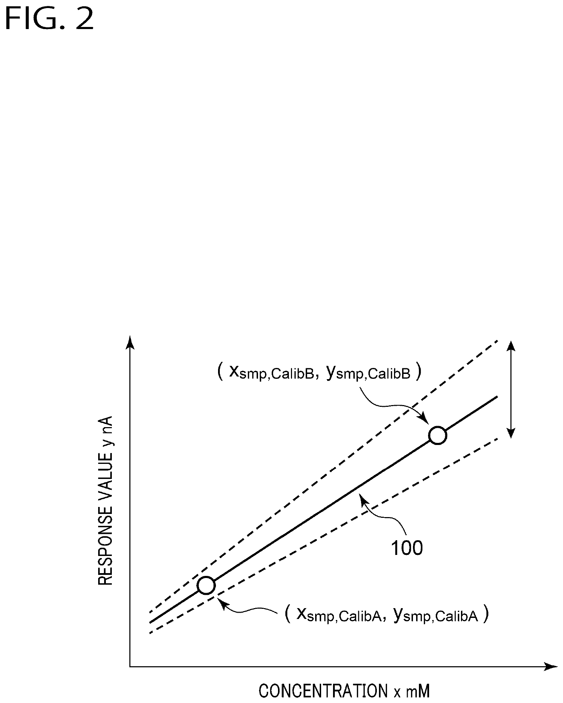

Fig. 2 illustrates an example of the calibration curve. The calibration curve is a graph illustrating a relationship between the response value measured by the electrochemical sensor and the concentration of the predetermined component. For example, a graph obtained by connecting a measurement result ($x_{smp,CalibA}$, $y_{smp,calibA}$) in the calibration A and a measurement result ($x_{smp,CalibB}$, $y_{smp,calibB}$) in the calibration B is created as a calibration curve 100.

The electrochemical sensor has a feature of changing in sensitivity over time under an influence of a measurement environment and a storage environment. Conventionally, a method has been employed in which a condition that affects a change in sensitivity of an electrochemical sensor over time is specified in advance, a correction coefficient over time is acquired in advance for each condition, and the change in sensitivity of the sensor is reflected by the correction coefficient. In the example of Fig. 2, there has been a case where the calibration curve 100 is moved with a lapse of time using the correction coefficient determined in advance, and for example, an inclination of the calibration curve 100 is gradually made gentle.

Following equation 1 represents an example of a regression equation for obtaining a correction coefficient Y as an objective variable.

$$Y = a_1 \times X_1 + a_2 \times X_2 + a_3 \times X_3 +$$

$$... + a_i \times X_i + b ... \quad (Equation\ 1)$$

$X_1$, $X_2$, ..., $X_i$ are items of conditions that affect the change in sensitivity of the electrochemical sensor over time, and are explanatory variables for the correction coefficient Y. Then, $a_1$, $a_2$, ..., $a_i$ are weights of the explanatory variables.

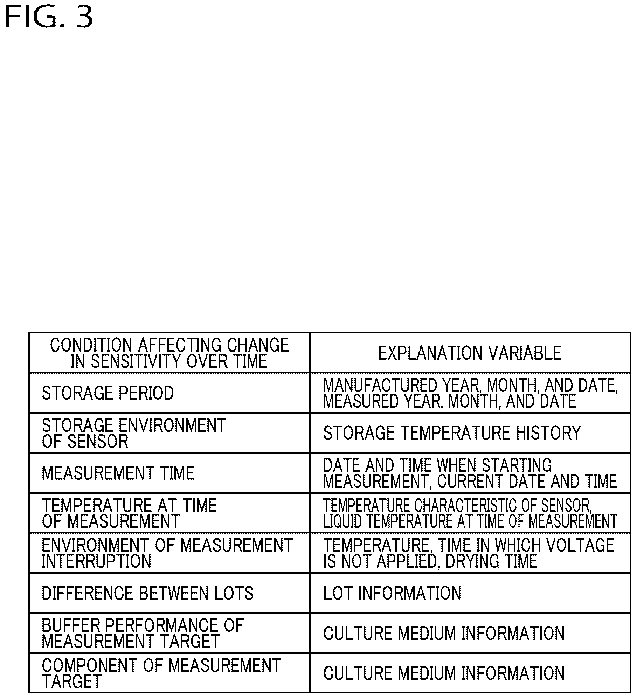

Fig. 3 illustrates an example of the conditions that affect the change in sensitivity of the electrochemical sensor over time, and an example of the explanatory variables corresponding to the respective conditions. There are a wide variety of conditions and explanatory variables, and enormous verification is required for obtaining appropriate explanatory variables, weights, and correction coefficients for each environment. It is difficult to obtain the correction coefficient reflecting an influence of an unknown (or unexpected) environment. Furthermore, in order to know the weight $a_i$ of each condition, information of a history of the measurement environment and the storage environment is necessary, but it is not always easy to acquire such information. Furthermore, conventionally, as illustrated in Fig. 1, there has been a case where accuracy of concentration measurement is deteriorated due to a decrease in response value until temperature is adjusted immediately after an experiment is started, and a variation in response value accompanying a change in temperature caused by opening/closing and the like of a door of an incubator 3 and the like.

Therefore, in each embodiment of the present disclosure, a sensitivity correction well is provided in a part of a multi-well plate, and the calibration curve is sequentially generated or updated so as to reflect the change in sensitivity in parallel with the actual measurement. Alternatively, in parallel with the actual measurement, the correction coefficient is sequentially derived so as to reflect the change in sensitivity. This makes it possible to improve accuracy of measurement over a long period of time using the electrochemical sensor.

<First Embodiment>

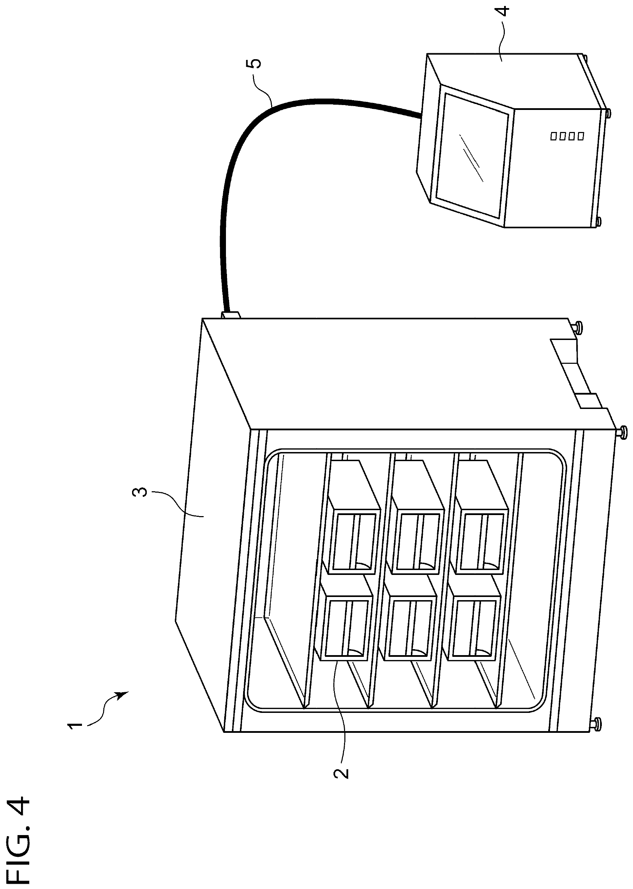

Fig. 4 illustrates a configuration of an analysis system 1 of a first embodiment. The analysis system 1 is provided with an incubator 3 and a control device 4. A detector 2 is installed in the incubator 3. The detector 2 detects a measurement result by an electrochemical sensor.

The control device 4 is an information processing device that analyzes the measurement result by the electrochemical sensor. The control device 4 is connected to the detector 2 via an electric cable 5, and is connected to a sensor module 14 to be described later via the detector 2. An electric signal indicating the measurement result by the electrochemical sensor of the sensor module 14 is transmitted from the detector 2 to the control device 4 via the electric cable 5.

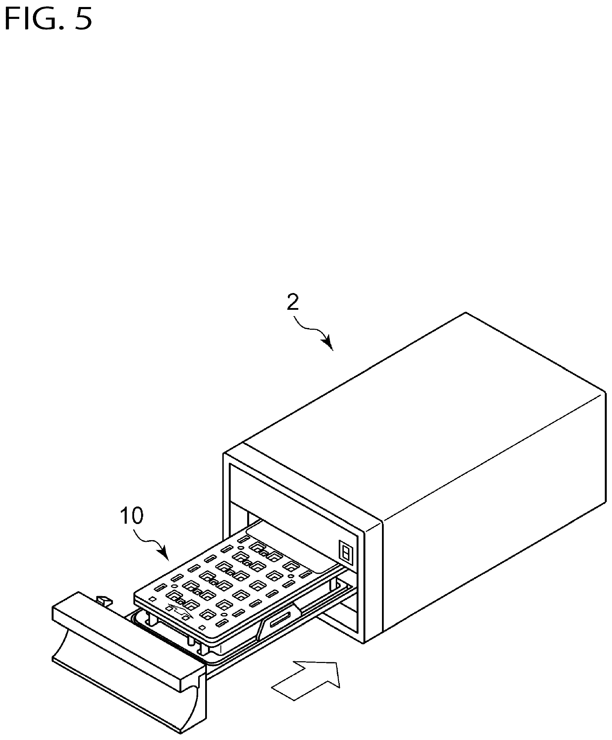

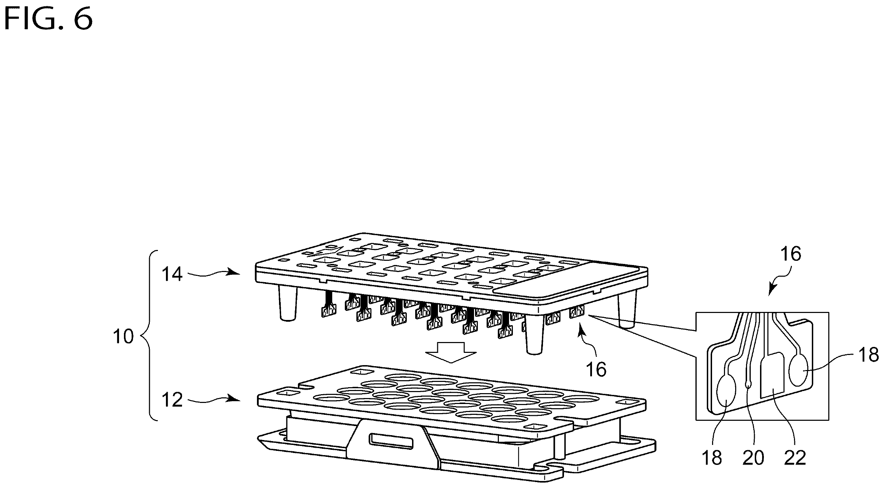

Fig. 5 illustrates an external appearance of the detector 2 of Fig. 4. An adapter unit 10 is accommodated in the detector 2. Fig. 6 illustrates the adapter unit 10 of Fig. 5 in detail. In the adapter unit 10, a sensor module 14 is arranged on a well plate 12 so as to overlap. The well plate 12 is a multi-well plate including 24 wells. The sensor module 14 is a member in which 24 electrochemical sensors (hereinafter, "sensors 16") that measure component concentrations of the 24 wells are integrally formed.

Each sensor 16 is used for measuring components contained in a culture solution in a state of being immersed in the culture solution in the well. For example, the sensor 16 can be used for measuring a concentration of a culture component such as glucose, and can be used for measuring a concentration of a metabolite such as lactic acid discharged from a culture such as a cell.

A measurement principle of the sensor 16 is described. In the well, an enzyme specifically reacts with glucose and lactic acid, and glucose and lactic acid are oxidized to generate electrons. The sensor 16 quantifies and measures electrons in the well as a current value. A glucose concentration (or a lactic acid concentration) in the well can be obtained on the basis of a calibration curve defining a relationship between the current value measured by the sensor 16 and the glucose concentration (or lactic acid concentration) and the current value measured by the sensor 16.

As illustrated in Fig. 6, the sensor 16 of the first embodiment is a three-electrode type sensor, and includes, for example, a structure in which an action electrode 18, a counter electrode 22, and a reference electrode 20 are provided at a distal end of an elongated substrate. The sensor 16 includes two action electrodes 18. In this case, the concentrations of different components (for example, glucose and lactic acid) can be measured by the respective action electrodes 18. The number of the action electrodes 18 may be one. The sensor 16 may be of a two-electrode type including only the action electrode 18 and the counter electrode 22.

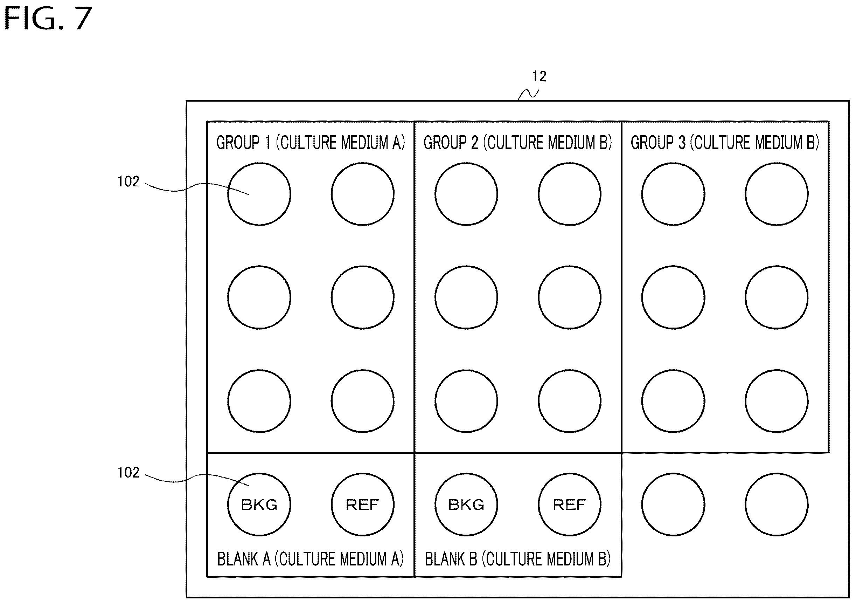

Fig. 7 illustrates a setting example of the well plate 12 of Fig. 5. As already described, the well plate 12 of the first embodiment includes 24 wells 102. In the well plate 12, a group of the wells 102 is provided for each combination of a type of the cell to be cultured and a type of a culture medium. A group 1 of Fig. 7 is a group of a cell A and a culture medium A (glucose concentration of Xa [mM], lactic acid concentration of Ya [mM]). A group 2 is a group of the cell A and a culture medium B (glucose concentration of Xb [mM], lactic acid concentration of Yb [mM]). A group 3 is a group of a cell B and the culture medium B (glucose concentration of Xb [mM], lactic acid concentration of Yb [mM]). Xa and Xb may be different values, and Ya and Yb may be different values. The well 102 of each group can also be referred to as an inspection well, and hereinafter also referred to as a "sample well". The cell A is, for example, a Jurkat cell, and the cell B is, for example, an NB4 cell.

In the well plate 12, the well 102 of only the culture medium without the cell (hereinafter, also referred to as a "blank" or a "blank well") is provided. The blank is also referred to as a correction well, that is, a well for acquiring correction data for reflecting a change in sensitivity of the electrochemical sensor. The blank is provided for each type of the culture medium. A blank A of Fig. 7 corresponds to the culture medium A and corresponds to the group 1. A blank B corresponds to the culture medium B and corresponds to the groups 2 and 3. Each of the blank A and the blank B includes a background well (hereinafter referred to as "BKG") and a reference well (hereinafter referred to as "REF").

The BKG of the blank A is without the cell and with the culture medium A (glucose concentration of 0 [mM], lactic acid concentration of 0 [mM]). The REF of the blank A is without the cell and with the culture medium A (glucose concentration of X [mM], lactic acid concentration of Y [mM]). The BKG of the blank B is without the cell and with the culture medium B (glucose concentration of 0 [mM], lactic acid concentration of 0 [mM]). The REF of the blank B is without the cell and with the culture medium B (glucose concentration of X [mM], lactic acid concentration of Y [mM]). Appropriate values of the glucose concentration and the lactic acid concentration of the REF of each blank may be determined by knowledge of an experimenter or an experiment using the analysis system 1. In the first embodiment, as a preferred example of the glucose concentration of the REF, the same glucose concentration as that of the corresponding sample well is set.

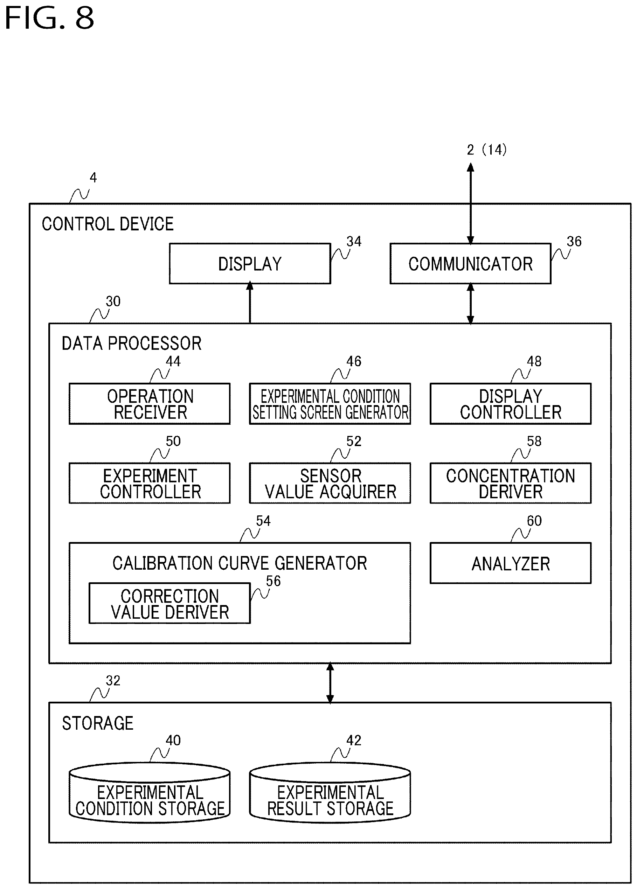

Fig. 8 is a block diagram illustrating a functional block of the control device 4 of Fig. 4. Each block illustrated in the block diagram of the present disclosure can be implemented as hardware by an element and a mechanical device such as a CPU and a memory of a computer, and as software by a computer program and the like; herein, a functional block implemented by cooperation of them is illustrated. It will be understood by those skilled in the art that these functional blocks can be implemented in a variety of manners by a combination of hardware and software.

The control device 4 is provided with a data processor 30, a storage 32, a display 34, and a communicator 36. The data processor 30 executes data processing regarding control of an experiment and data processing regarding analysis of a measurement result by the sensor module 14. The storage 32 stores data referenced or updated by the data processor 30.

The display 34 displays various types of information. The display 34 includes a touch panel and also functions as an input unit to which a user (experimenter) inputs an operation. The communicator 36 communicates with an external device according to a predetermined communication protocol. The data processor 30 is connected to the detector 2 (sensor module 14) via the communicator 36.

The storage 32 includes an experimental condition storage 40 and an experimental result storage 42. The experimental condition storage 40 stores data of an experimental condition set by the user. The experimental result storage 42 stores data of an experimental result in the analysis system 1. As the data of the experimental result, a concentration of a predetermined component in each well of the well plate 12 based on the measurement result by the electrochemical sensor is stored. In the first embodiment, the component the concentration of which is measured is glucose, but the technology of the first embodiment is also applicable to a case where another component the concentration of which can be measured using the electrochemical sensor is made a concentration measurement target. Another component may be, for example, lactic acid or glutamine.

The data processor 30 includes an operation receiver 44, an experimental condition setting screen generator 46, a display controller 48, an experiment controller 50, a sensor value acquirer 52, a calibration curve generator 54, a concentration deriver 58, and an analyzer 60. Functions of at least a part of the plurality of functional blocks may be implemented in a computer program (hereinafter, also referred to as an "experiment support program"). The experiment support program may be installed in a storage of the control device 4 via a recording medium or a network. A processor (CPU and the like) of the control device 4 may exhibit the functions of the plurality of functional blocks described above by reading the experiment support program into a main memory from the storage and running the program.

The operation receiver 44 receives the operation input by the user to the display 34. The experimental condition setting screen generator 46 generates data of a screen (hereinafter, also referred to as an "experimental condition setting screen") on which the user sets the experimental condition in the analysis system 1. The display controller 48 causes the display 34 to display the experimental condition setting screen generated by the experimental condition setting screen generator 46. The experiment controller 50 advances the experiment in the analysis system 1 including cell culture in the well plate 12 according to the experimental condition stored in the experimental condition storage 40.

At the time of calibration in which the glucose concentration in the sample well is known, the sensor value acquirer 52 acquires the current value measured by the sensor 16 in each of the sample well and the blank well corresponding to the sample well from the detector 2. At the time of the actual measurement after the calibration in which the glucose concentration in the sample well is unknown, the sensor value acquirer 52 acquires the current value measured by the sensor 16 in each of the sample well and the blank well corresponding to the sample well from the detector 2.

The calibration curve generator 54 generates the calibration curve at the time of the actual measurement on the basis of the value measured in each of the sample well and the blank well at the time of the calibration and the value measured in the blank well at the time of the actual measurement. The calibration curve generator 54 includes a correction value deriver 56. As will be described later in detail, the correction value deriver 56 derives a correction value based on a change in sensitivity of the sensor 16 over time for generating the calibration curve at the time of the actual measurement.

The concentration deriver 58 derives the glucose concentration in the sample well at the time of the actual measurement on the basis of the calibration curve at the time of the actual measurement generated by the calibration curve generator 54 and the value measured in the sample well at the time of the actual measurement. The concentration deriver 58 stores experimental result data including the glucose concentration in the sample well at the time of the actual measurement in the experimental result storage 42.

The analyzer 60 generates data of an analysis screen using the experimental result data stored in the experimental result storage 42. For example, the analyzer 60 may generate the analysis screen including a concentration transition graph in which time is plotted along the horizontal axis and the glucose concentration is plotted along the vertical axis. The concentration transition graph may be a graph illustrating a transition in time series of the glucose concentration for each well, or may be a graph illustrating a transition in time series of an average value of the glucose concentration for each group.

An operation of the analysis system 1 according to the above-described configuration is described.

The user activates the experiment support program in the control device 4. The experimental condition setting screen generator 46 of the control device 4 generates data of the experimental condition setting screen, and the display controller 48 of the control device 4 causes the display 34 to display the experimental condition setting screen. The experimental condition setting screen of the first embodiment includes a blank information input screen 110, a blank arrangement screen 112, a group information input screen 114, and a group arrangement screen 116, and transitions in this order.

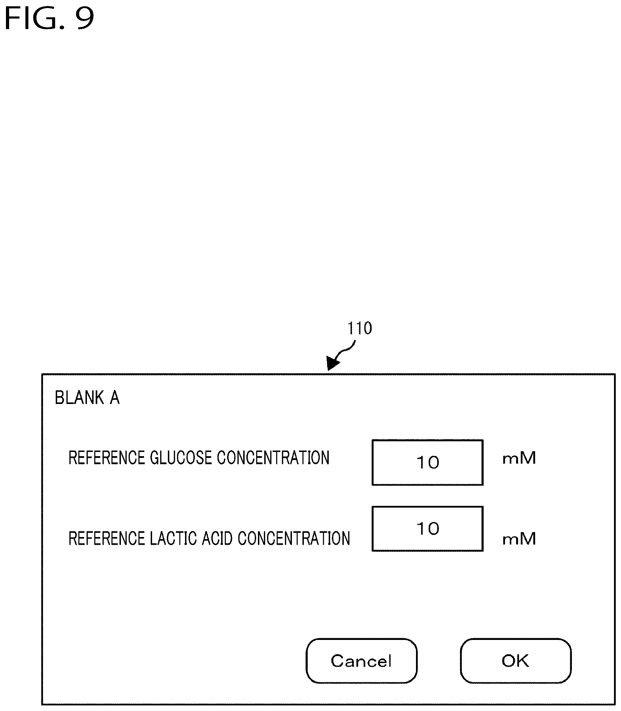

Fig. 9 illustrates an example of the blank information input screen 110. The blank information input screen 110 is a screen on which information regarding the blank well (blank A in Fig. 9) is input. The user inputs the glucose concentration and the lactic acid concentration of a reference blank well on the blank information input screen 110.

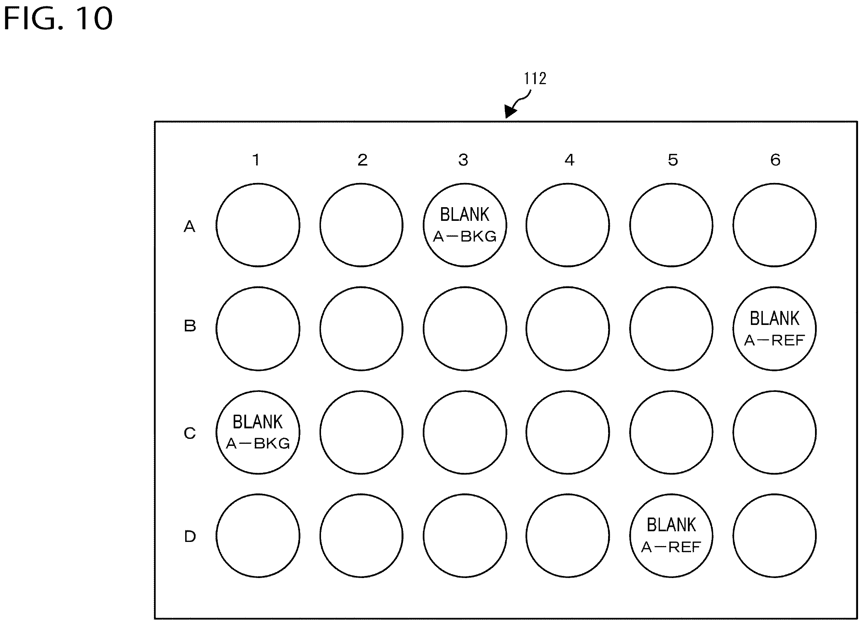

Fig. 10 illustrates an example of the blank arrangement screen 112. The blank arrangement screen 112 is a screen on which the blank well is arranged in the well in the well plate 12. In Fig. 10, the user arranges each of the BKG and REF of the blank A in at least one of the 24 wells in the well plate 12 on the blank arrangement screen 112.

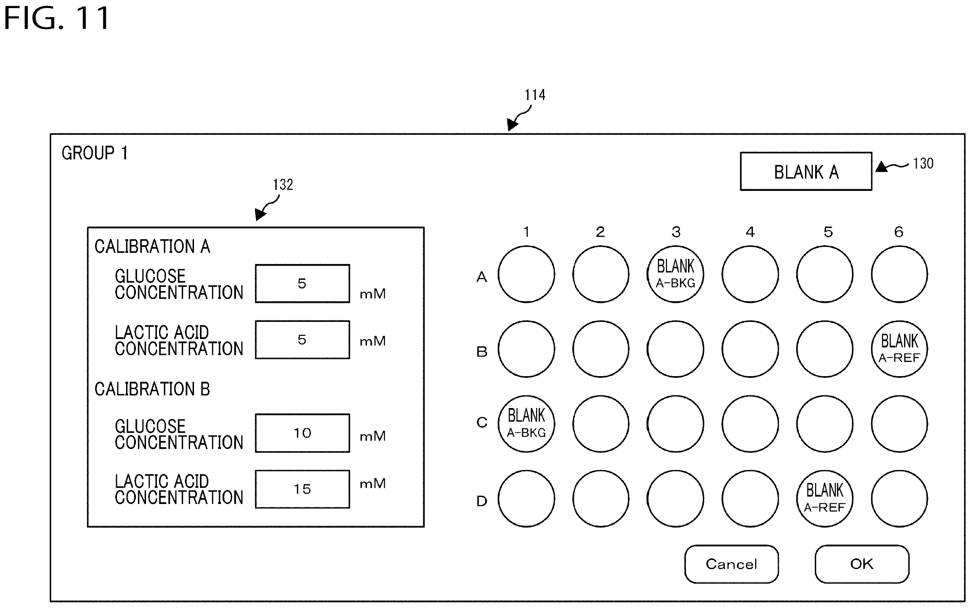

Fig. 11 illustrates an example of the group information input screen 114. The group information input screen 114 is a screen on which information regarding the group well (group 1 in Fig. 11) is input. The user sets the blank (blank A in Fig. 11) to be used for correction over time in an area 130. The user sets, in an area 132, the glucose concentration and the lactic acid concentration of the solution to be used in calibration A, which is first calibration, and the glucose concentration and the lactic acid concentration of the solution to be used in calibration B, which is second calibration.

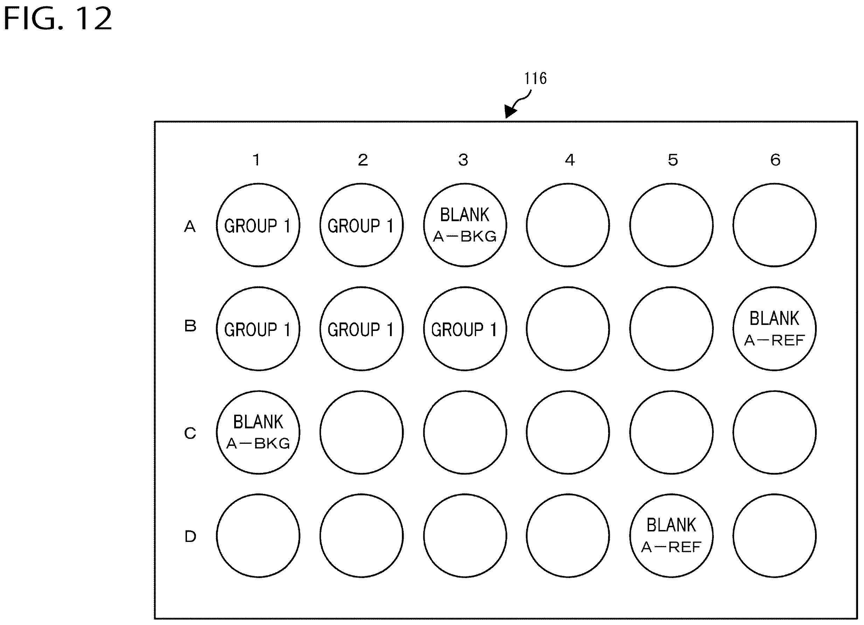

Fig. 12 illustrates an example of the group arrangement screen 116. The group arrangement screen 116 is a screen on which the sample well of each group is arranged in the well in the well plate 12. In Fig. 12, the user arranges the sample well of the group 1 in at least one of the 24 wells in the well plate 12 on the group arrangement screen 116. Note that, as illustrated in Fig. 7, the user can arrange a plurality of groups (for example, the groups 1 to 3) on the well plate 12, and can arrange a plurality of blanks (for example, the blanks A and B) on the well plate 12.

The operation receiver 44 of the control device 4 receives the experimental condition input by the user on the experimental condition setting screen (including the blank information input screen 110, blank arrangement screen 112, group information input screen 114, and group arrangement screen 116). The experimental condition storage 40 of the control device 4 stores the experimental condition input to the experimental condition setting screen.

The experiment controller 50 of the control device 4 executes an automatic culture process in the well plate 12 in cooperation with a pump unit and the like not illustrated according to the experimental condition stored in the experimental condition storage 40. The automatic culture process may include automatic culture medium replacement of each well of the well plate 12. In the automatic culture process of the first embodiment, the calibration A (20 hours or longer), the calibration B (20 hours or longer), and the actual measurement (about 10 days) are executed in this order. The automatic culture process may be implemented using a known technology.

During each period of the calibration A, the calibration B, and the actual measurement, each sensor 16 of the sensor module 14 periodically measures the current values (at one-minute intervals in the first embodiment). The detector 2 sequentially transmits the current values measured by each sensor 16 of the sensor module 14 to the control device 4. The sensor value acquirer 52 of the control device 4 acquires the current values (response values) measured by each sensor 16 of the sensor module 14 transmitted from the detector 2. The calibration curve generator 54 of the control device 4 generates an initial calibration curve on the basis of the current values measured in the sample well at the time of the calibration A and calibration B.

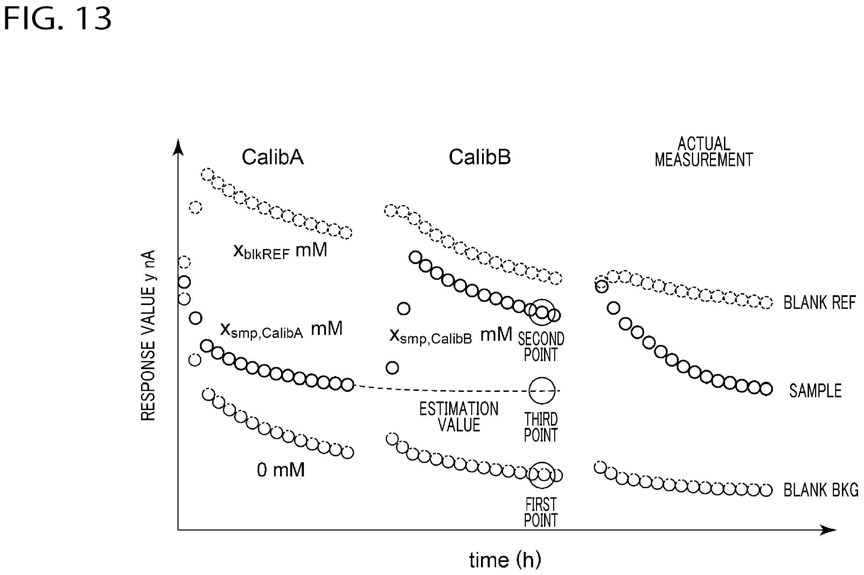

Fig. 13 illustrates an example of measurement results used for generating the initial calibration curve. Fig. 13 illustrates the measurement result of the blank REF, the measurement result of the sample well, and the measurement result of the blank BKG in descending order of the response values. The same applies to the subsequent drawings illustrating the measurement results. In the first embodiment, on the basis of the current value measured in the blank well at the time of the calibration A and the current value measured in the blank well at the time of the calibration B, the correction value deriver 56 of the calibration curve generator 54 derives a correction value (third point in Fig. 13) obtained by correcting the value measured in the sample well at the time of the calibration A so as to reflect the change in sensitivity of the sensor 16 with a lapse of time from the time of the calibration A to the time of the calibration B.

Specifically, the correction value deriver 56 derives a correction value $y^\wedge_{smp,CalibA}$ according to Equation 2.

$$\hat{y}_{smp,Calib\,A} = \frac{y_{smp,Calib\,A} - y_{blk\,BKG,Calib\,A}}{y_{blk\,REF,Calib\,A} - y_{blk\,BKG,Calib\,A}} \left( y_{blk\,REF,CalibB} - y_{blk\,BKG,CalibB} \right) + y_{blk\,BKG,CalibB}$$

$$\cdots \text{(Equation 2)}$$

The meanings of the terms in Equation 2 are as follows.

$y_{blk\,REF,CalibA}$: measured value in blank REF at the time of calibration A
$y_{blk\,BKG,CalibA}$: measured value in blank BKG at the time of calibration A
$y_{smp,CalibA}$: measured value in sample well at the time of calibration A
$y_{blk\,REF,CalibB}$: measured value in blank REF at the time of calibration B
$y_{blk\,BKG,CalibB}$ : measured value in blank BKG at the time of calibration B

Note that, the measured values at the time of the calibration of the equation described in the present disclosure are values after stabilization.

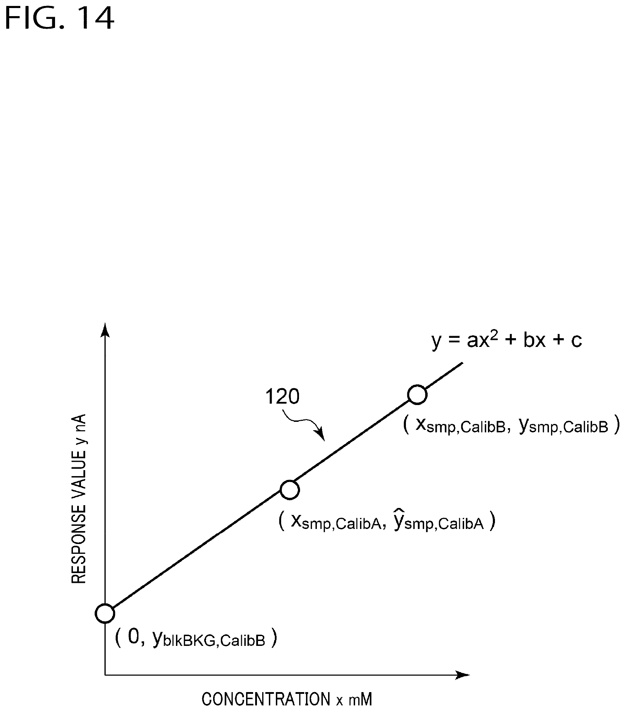

Fig. 14 illustrates an example of the initial calibration curve. The calibration curve generator 54 generates an initial calibration curve 120 on the basis of the current value (second point in Fig. 13) measured in the sample well at the time of the calibration B and the correction value (third point in Fig. 13) derived according to Equation 2. In the first embodiment, the calibration curve generator 54 further generates the initial calibration curve 120 also on the basis of the current value (first point $(0, y_{blk\,BKG,CalibB})$ in Fig. 13) measured in the blank BKG at the time of the calibration B. For example, the calibration curve generator 54 may derive an approximate curve for the current value (first point in Fig. 13) measured in the blank BKG at the time of the calibration B, the current value (second point in Fig. 13) measured in the sample well at the time of the calibration B, and the correction value (third point in Fig. 13) derived according to Equation 2 as the initial calibration curve 120 using known curve fitting.

As a modification, it is possible that the blank BKG is not provided. In this case, the calibration curve generator 54 may derive an approximate curve for a predetermined value (for example, original point (0nA, 0mM)), the current value (second point in Fig. 13) measured in the sample well at the time of the calibration B, and the correction value (third point in Fig. 13) derived according to Equation 2 as the initial calibration curve 120.

In Fig. 14, a graph of a quadratic function ($y = ax^2 + bx + c$) is illustrated as an example of the initial calibration curve 120. The initial calibration curve may be a linear function or a cubic or higher function. The same applies to calibration curves other than the initial calibration curve.

As a modification, as described in connection with reference to Figs. 1 and 2, the calibration curve generator 54 may generate the initial calibration curve 120 on the basis of a group of the current value measured in the sample well at the time of the calibration A and the glucose concentration, and a group of the current value measured in the sample well at the time of the calibration B and the glucose concentration.

The calibration curve generator 54 generates a calibration curve at the time of the actual measurement (hereinafter, also referred to as an "actual measurement time calibration curve") in a case where the current value measured in each of the sample well and the blank well at the time of the actual measurement is acquired by the sensor value acquirer 52. In other words, the calibration curve generator 54 generates a new actual measurement time calibration curve for obtaining the glucose concentration at a current measurement time point each time a result of the actual measurement is acquired. As already described, in the first embodiment, the results of the actual measurement are acquired at one-minute intervals. Therefore, the calibration curve generator 54 updates the actual measurement time calibration curve at one-minute intervals.

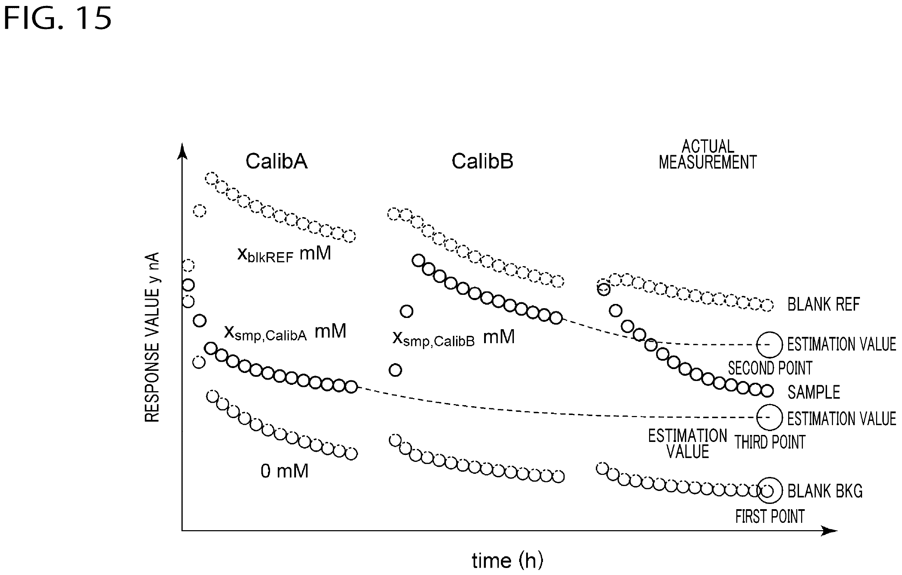

Fig. 15 illustrates an example of measurement results used for generating the actual measurement time calibration curve. On the basis of the value measured in the blank well at the time of the calibration and the value measured in the blank well at the time of the actual measurement, the correction value deriver 56 of the calibration curve generator 54 derives a first correction value (third point in Fig. 15) obtained by correcting the value measured in the sample well at the time of the calibration A so as to reflect the change in sensitivity of the sensor 16 with a lapse of time from the time of the calibration A to the time of the actual measurement.

In the first embodiment, when deriving the first correction value, the correction value deriver 56 uses the value measured in the blank well at the time of the calibration A and the value measured in the blank well at the time of the actual measurement. That is, on the basis of the value measured in the blank well at the time of the calibration A and the value measured in the blank well at the time of the actual measurement, the correction value deriver 56 derives the first correction value obtained by correcting the value measured in the sample well at the time of the calibration A so as to reflect the change in sensitivity of the sensor 16 with a lapse of time from the time of the calibration A to the time of the actual measurement.

Specifically, the correction value deriver 56 derives a first correction value $y^\wedge_{smp,CalibA}$ according to Equation 3.

$$\hat{y}_{smp,Calib\,A} \equiv \frac{y_{smp,Calib\,A} - y_{blk\,BKG,Calib\,A}}{y_{blk\,REF,Calib\,A} - y_{blk\,BKG,Calib\,A}} \left( y_{blk\,REF,i} - y_{blk\,BKG,i} \right) + y_{blk\,BKG,i} \qquad \cdots \text{(Equation 3)}$$

The meanings of each term in Equation 3 are as follows. The already described terms are not repeated.

$y_{blk\,REF,i}$: measured value in blank REF at the time of actual measurement
$y_{blk\,BKG,i}$: measured value in blank BKG at the time of actual measurement

On the basis of the value measured in the blank well at the time of the calibration and the value measured in the blank well at the time of the actual measurement, the correction value deriver 56 derives a second correction value (second point in Fig. 15) obtained by correcting the value measured in the sample well at the time of the calibration B so as to reflect the change in sensitivity of the sensor 16 with a lapse of time from the time of the calibration B to the time of the actual measurement.

In the first embodiment, on the basis of the value measured in the blank well at the time of the calibration B and the value measured in the blank well at the time of the actual measurement, the correction value deriver 56 derives the second correction value obtained by correcting the value measured in the sample well at the time of the calibration B so as to reflect the change in sensitivity of the sensor 16 with a lapse of time from the time of the calibration B to the time of the actual measurement.

Specifically, the correction value deriver 56 derives a second correction value $y^\wedge_{smp,CalibB}$ according to Equation 4.

$$\hat{y}_{smp,Calib\,B} = \frac{y_{smp,Calib\,B} - y_{blk\,BKG,Calib\,B}}{y_{blk\,REF,Calib\,B} - y_{blk\,BKG,Calib\,B}} \left( y_{blk\,REF,i} - y_{blk\,BKG,i} \right) + y_{blk\,BKG,i} \qquad \cdots \text{(Equation 4)}$$

The meanings of each term in Equation 4 are as follows. The already described terms are not repeated.

$y_{blk\,REF,CalibB}$: measured value in blank REF at the time of calibration B
$y_{blk\,BKG,CalibB}$ : measured value in blank BKG at the time of calibration B
$y_{smp,CalieB}$: measured value in sample well at the time of calibration B

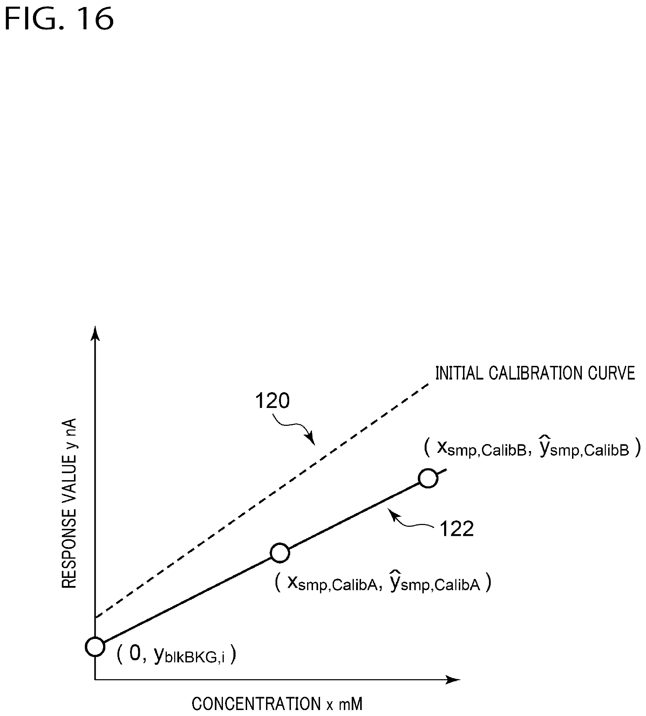

Fig. 16 illustrates an example of the actual measurement time calibration curve. The calibration curve generator 54 generates an actual measurement time calibration curve 122 on the basis of the first correction value and the second correction value derived by the correction value deriver 56. In the first embodiment, the calibration curve generator 54 further generates the actual measurement time calibration curve 122 also on the basis of the current value (first point $(0,y_{blk\,BKG,i})$ in Fig. 15)) measured in the blank BKG at the time of the actual measurement. For example, the calibration curve generator 54 may derive an approximate curve for the current value (first point in Fig. 15) measured in the blank BKG at the time of the actual measurement, the first correction value (third point in Fig. 15), and the second correction value (second point in Fig. 15) as the actual measurement time calibration curve 122 using known curve fitting.

The concentration deriver 58 of the control device 4 derives the glucose concentration in the sample well at the time of the actual measurement on the basis of the current value measured in the sample well at the time of the actual measurement acquired by the sensor value acquirer 52, and the actual measurement time calibration curve generated by the calibration curve generator 54 when the measurement result is acquired. The concentration deriver 58 stores the experimental result including a group of the current value measured in the sample well, the glucose concentration, and time (measurement time) in the experimental result storage 42 as data in each of the calibration A, the calibration B, and the actual measurement. That is, the concentration deriver 58 stores the experimental result including information indicating transition in time series of the glucose concentration in the sample well in the experimental result storage 42.

In the blank well, the concentration deriver 58 records a current value ratio with respect to the current value after the calibration B is stabilized. Specifically, in a case where the current value of the blank REF after the calibration B is stabilized is set to A (= $y_{blk\,REF,CalibB}$), and the current value of the blank REF at the time of the actual measurement is set to B (= $y_{blk\,REF,Meas}$), the concentration deriver 58 records B/A as the current value ratio of the blank REF. In a case where the current value of the blank BKG after the calibration B is stabilized is set to C (= $y_{blk\,BKG,CalibB}$), and the current value of the blank BKG at the time of the actual measurement is set to D (= $y_{blk\,BKG,Meas}$), the concentration deriver 58 records D/C as the current value ratio of the blank BKG. The concentration deriver 58 stores the current value ratio of each of the blank REF and the blank BKG in the experimental result storage 42. Note that, an outlier of the blank well to be described later may be determined using the current value ratio.

The analyzer 60 of the control device 4 generates data of the analysis screen based on the experimental result data stored in the experimental result storage 42 according to the operation by the user input to the display 34. The display controller 48 of the control device 4 causes the display 34 to display the data of the analysis screen.

In the analysis system 1 of the first embodiment, since the blank well (BKG and REF) is set in the same culture medium as the sample well, this has the same component and the same temperature influence as those of the sample well. Since the plurality of sensors 16 (electrochemical sensors) is integrally formed as the sensor module 14, a production lot, a storage environment, and a measurement environment of the plurality of sensors 16 are the same. In the analysis system 1 of the first embodiment, the calibration curve is sequentially updated on the basis of a behavior of the change in blank well over time so as to reflect the change in sensitivity of the sensor 16 over time. This makes it possible to improve the accuracy of measurement over a long period of time using the electrochemical sensor. For example, it is possible to absorb a decrease in the response value until the temperature is adjusted immediately after the experiment starts, a variation in response value due to a change in temperature caused by opening/closing of the door of the incubator 3, deterioration in sensitivity of the electrochemical sensor and the like. Verification in advance of the correction coefficient and acquisition of the value of the explanatory variable become unnecessary.

The analysis system 1 of the first embodiment generates the actual measurement time calibration curve 122 on the basis of the first correction value obtained by correcting the value measured in the sample well at the time of the calibration A so as to reflect the change in sensitivity of the sensor 16 with a lapse of time from the time of the calibration A to the actual measurement, and a second correction value obtained by correcting the value measured in the sample well at the time of the calibration B so as to reflect the change in sensitivity of the sensor 16 with a lapse of time from the time of the calibration B to the actual measurement. This makes it possible to improve the measurement accuracy at the time of the actual measurement using the actual measurement time calibration curve 122 reflecting the change in sensitivity of the electrochemical sensor. By deriving the first correction value on the basis of the value measured in the blank well at the time of the calibration A and the value measured in the blank well at the time of the actual measurement, it is possible to obtain the actual measurement time calibration curve 122 reflecting the change in sensitivity from the time of the calibration A with high accuracy.

The present disclosure has been described above on the basis of the first embodiment. The first embodiment is intended to be illustrative only and it will be understood by those skilled in the art that various modifications to combinations of components and processes of the first embodiment are possible and that such modifications are also within the scope of the present disclosure.

A modification of the first embodiment is described. When deriving the first correction value, the correction value deriver 56 may use the value measured in the blank well at the time of the calibration B and the value measured in the blank well at the time of the actual measurement. That is, on the basis of the value measured in the blank well at the time of the calibration B and the value measured in the blank well at the time of the actual measurement, the correction value deriver 56 may derive the first correction value obtained by correcting the value measured in the sample well at the time of the calibration A so as to reflect the change in sensitivity of the sensor 16 with a lapse of time from the time of the calibration A to the time of the actual measurement. Specifically, a denominator in Equation 3 may be changed from ($y_{blk\,REF,CalibA}$ - $y_{blk\,BKG,CalibA}$) to ($Y_{blk\,REF,CalibB}$ - $Y_{blk\,BKG,CalibB}$).

In some electrochemical sensors, the measured value is unstable until a certain time elapses from when the experiment starts. Therefore, as in the present modification, by deriving the first correction value using the value measured in the blank well at the time of the calibration B in which the measured value of the electrochemical sensor is relatively stable, it is possible to suppress deterioration in accuracy of the first correction value even in a case of using the electrochemical sensor in which the measured value is unstable until a certain time elapses from the start of the experiment, and it is possible to obtain the actual measurement time calibration curve 122 reflecting the change in sensitivity from the time of the calibration A with high accuracy.

Another modification of the first embodiment is described. In a case where the value measured in the blank well is an outlier, the calibration curve generator 54 of the control device 4 may generate the actual measurement time calibration curve 122 while excluding the value measured in the blank well. The outlier can also be said to be a value deviating from a normal range. Whether the value measured in the blank well is the outlier may be determined by the user, or may be autonomously determined by the control device 4 on the basis of reference data determined in advance.

For example, after completion of an entire period of the actual measurement, the analyzer 60 may generate data of the analysis screen including a screen element (for example, a GUI object) in which the user can set, for the sensor 16 of each well of the well plate 12, that the sensor is the sensor 16 that has measured the outlier (hereinafter, also referred to as an "outlier sensor"). The user may look at the above concentration transition graph displayed on the analysis screen to specify the sensor 16 of the sample well in which the concentration or the current value is an abnormal value as the outlier sensor.

The analyzer 60 may generate the data of the analysis screen including a graph indicating transition in time series of the current value ratio of the blank REF stored in the experimental result storage 42 and a graph indicating transition in time series of the current value ratio of the BKG stored in the experimental result storage 42. The user may confirm the transition of the current value ratio of the blank REF displayed on the analysis screen and specify the sensor 16 of the blank REF as the outlier sensor. The user may confirm the transition of the current value ratio of the blank BKG displayed on the analysis screen and specify the sensor 16 of the blank BKG as the outlier sensor.

The control device 4 may further include an outlier detector (not illustrated). The outlier detector may detect, as the outlier sensor, the sensor 16 in which the current value deviating from the normal range determined in advance is measured among the sensors 16 of each well of the well plate 12. Alternatively, the outlier detector may detect, as the outlier sensor, the sensor 16 in which the concentration derived on the basis of the measured current value deviates from the normal range determined in advance among the sensors 16 of each well of the well plate 12.

In a case where the current value ratio of the blank REF stored in the experimental result storage 42 deviates from the normal range determined in advance, the outlier detector may detect the sensor 16 of the blank REF as the outlier sensor. In a case where the current value ratio of the blank BKG stored in the experimental result storage 42 deviates from the normal range determined in advance, the outlier detector may detect the sensor 16 of the blank BKG as the outlier sensor. Hereinafter, in a case of simply referred to as the outlier sensor, the outlier sensor specified by the user on the analysis screen and the outlier sensor detected by the outlier detector are included.

In a case where the outlier sensor is the sensor 16 that measures the sample well, the analyzer 60 may exclude information based on the measured value of the outlier sensor (for example, the graph illustrating transition in time series of glucose concentration and the like) from the display target on the analysis screen. In other words, the analyzer 60 may hide the information based on the measurement value of the outlier sensor on the analysis screen.

In contrast, in a case where the outlier sensor is the sensor 16 that measures the blank well, the calibration curve generator 54 may recalculate the initial calibration curve 120 and the actual measurement time calibration curve 122. The concentration deriver 58 may derive again the glucose concentration in the sample well at each time point in an actual measurement period using the actual measurement time calibration curve 122 that is recalculated.

A processing example in a case where the outlier sensor is the sensor 16 that measures the blank well is described. In a case where the sensor 16 that measures the blank BKG is the outlier sensor, the calibration curve generator 54 may recalculate the initial calibration curve 120 and the actual measurement time calibration curve 122 while setting the current value measured by the blank BKG to 0.

In a case where the sensor 16 that measures the blank REF is the outlier sensor, the calibration curve generator 54 may change the processing depending on whether one or more effective sensors 16 that measure the blank REF excluding the outlier sensor remain. In a case where one or more effective sensors 16 that measure the blank REF remain, the calibration curve generator 54 may recalculate the initial calibration curve 120 and the actual measurement time calibration curve 122 using the measurement value of the effective sensor 16 that measures the blank REF while excluding the measurement value of the outlier sensor. Note that, in a case where a plurality of effective sensors 16 that measures the blank REF remains, the calibration curve generator 54 may recalculate the initial calibration curve 120 and the actual measurement time calibration curve 122 using an average value of the measurement values of a plurality of effective sensors 16.

In a case where the number of the effective sensors 16 that measure the blank REF becomes 0, the processing of the correction over time may be stopped. For example, the calibration curve generator 54 may stop generating the actual measurement time calibration curve 122. The calibration curve generator 54 may generate the initial calibration curve 120 on the basis of a group of the current value measured in the sample well at the time of the calibration A and the glucose concentration, and a group of the current value measured in the sample well at the time of the calibration B and the glucose concentration. The concentration deriver 58 may derive the glucose concentration at the time of the actual measurement using the initial calibration curve 120.

According to this modification, after completion of the entire period of the actual measurement or during the actual measurement, the concentration can be recalculated while setting the sensor in which the abnormality is recognized as the outlier sensor, so that the accuracy of the concentration measurement can be further enhanced.

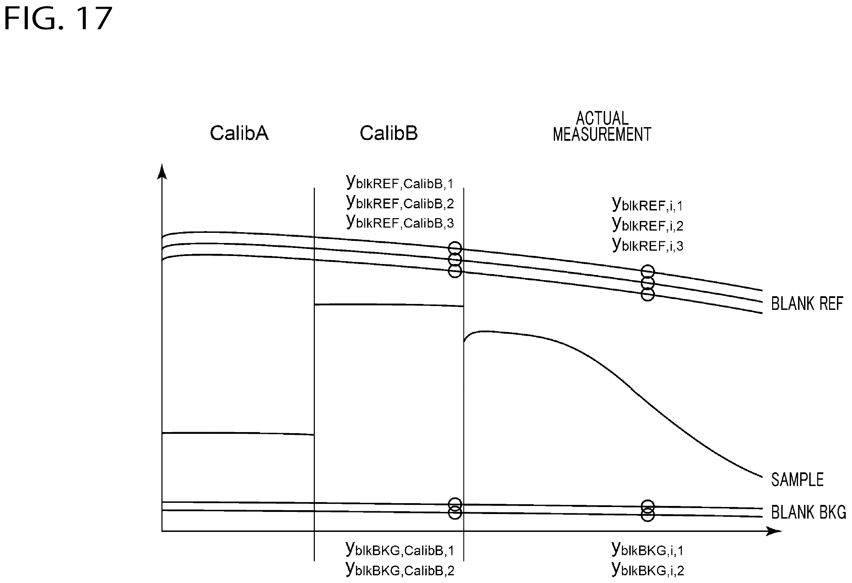

Hereinafter, processing in a case where a plurality of blank wells corresponding to one sample group is provided is described. Fig. 17 illustrates an example of measurement results in a plurality of blank wells. Fig. 17 illustrates, as an example, measurement results in three blanks REF and measurement results in two blanks BKG. As illustrated in Fig. 17, in a case where a plurality of blank REFs and/or a plurality of blank BKGs corresponding to one group is provided, the correction value deriver 56 derives an average value of values calculated for each blank as a correction value or a correction coefficient.

Hereinafter, a specific example of deriving the correction value or the correction coefficient in a case where a plurality of blank REFs and/or a plurality of blank BKGs corresponding to one group is provided is described. Here, the number of blanks REF is set to n, and the number of blanks BKG is set to m.

The correction value deriver 56 of the calibration curve generator 54 derives a correction value $\hat{y}_{smp,CalibA}$ used for generating the initial calibration curve according to Equation 2'.

$$\hat{y}_{smp,CalibA} = \overline{\hat{y}_{smp,CalibA,n}} - \left( \frac{y_{smp,CalibA} - \overline{y_{blkBKG,CalibA,m}}}{\overline{y_{blkREF,CalibA,n}} - \overline{y_{blkBKG,CalibA,m}}} \left( \overline{y_{blkREF,CalibB,n}} - \overline{y_{blkBKG,CalibB,m}} \right) + \overline{y_{blkBKG,CalibB,m}} \right)$$

$$\cdots \text{(Equation 2')}$$

$X_n$ with overline (bar) means an average value of $X_n$.

The correction value deriver 56 derives a first correction value $\hat{y}_{smp,CalibA}$ used for generating the actual measurement time calibration curve according to Equation 3'.

$$\hat{y}_{smp,CalibA} = \overline{\hat{y}_{smp,CalibA,n}} = \left( \frac{y_{smp,CalibA} - \overline{y_{blkBKG,CalibA,m}}}{\overline{y_{blkREF,CalibA,n}} - \overline{y_{blkBKG,CalibA,m}}} \left( \overline{y_{blkREF,i,n}} - \overline{y_{blkBKG,i,m}} \right) + \overline{y_{blkBKG,i,m}} \right)$$

$$\cdots \text{(Equation 3')}$$

The correction value deriver 56 derives a second correction value $\hat{y}_{smp,CalibB}$ used for generating the actual measurement time calibration curve according to Equation 4'.

$$\hat{y}_{smp,CalibB} = \overline{\hat{y}_{smp,CalibB,n}} = \left( \frac{y_{smp,CalibB} - \overline{y_{blkBKG,CalibB,m}}}{\overline{y_{blkREF,CalibB,n}} - \overline{y_{blkBKG,CalibB,m}}} \left( \overline{y_{blkREF,i,n}} - \overline{y_{blkBKG,i,m}} \right) + \overline{y_{blkBKG,i,m}} \right)$$

$$\cdots \text{(Equation 4')}$$

<Second Embodiment>

A second embodiment is described focusing on differences from the first embodiment, and common points are not described. It goes without saying that the features of the second embodiment can be optionally combined with the features of other embodiments and the features of the modifications. In the second embodiment, an initial calibration curve is sequentially updated so as to reflect a change in sensitivity of a sensor 16 over time.

A configuration of an analysis system 1 of the second embodiment is the same as the configuration of the analysis system 1 of the first embodiment illustrated in Fig. 4. A functional block of a control device 4 of the second embodiment is the same as the functional block of the control device 4 of the first embodiment illustrated in Fig. 8.

A correction value deriver 56 of a calibration curve generator 54 of the control device 4 derives a correction coefficient regarding the change in sensitivity of the sensor 16 with a lapse of time from the time of calibration to the time of actual measurement on the basis of the value measured in the blank well at the time of the calibration and the value measured in the blank well at the time of the actual measurement.

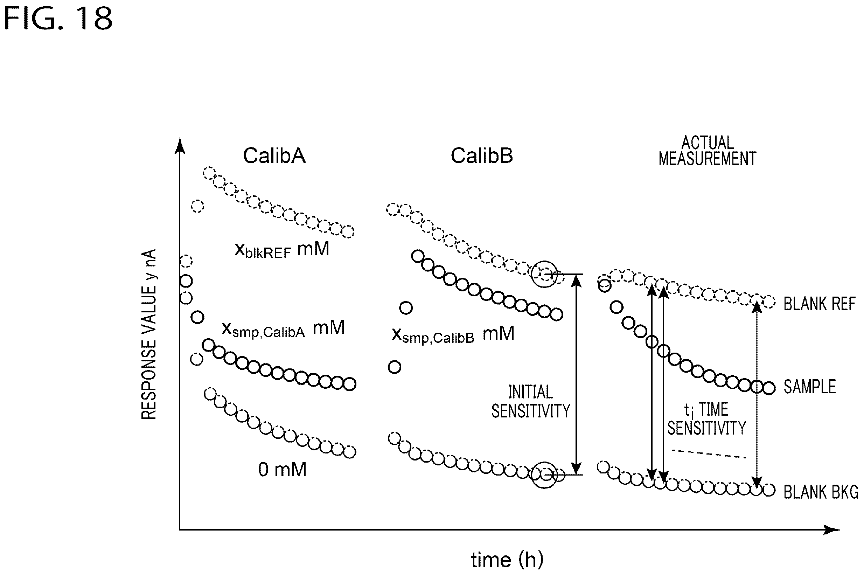

Fig. 18 illustrates an example of measurement results used for deriving the correction coefficient. In the second embodiment, the correction value deriver 56 derives the sensitivity (hereinafter, also referred to as "initial sensitivity") of the sensor 16 at the end of calibration B on the basis of measurement values of a blank REF and a blank BKG. The correction value deriver 56 derives the sensitivity (hereinafter, also referred to as "$t_i$ time sensitivity") of the sensor 16 at any time $t_i$ of an actual measurement period on the basis of the measurement values of the blank REF and the blank BKG.

Specifically, the correction value deriver 56 derives a correction coefficient $k_{corr,i}$ according to Equation 5.

$$k_{corr,i} = \frac{y_{blkREF,i} - y_{blkBKG,i}}{y_{blkREF,CalibB} - y_{blkBKG,CalibB}} \quad \left( = \frac{t_i \text{ time sensitivity}}{\text{initial sensitivity}} \right) \cdots \text{(Equation 5)}$$

A denominator on a right side of Equation 5 represents the initial sensitivity, and a numerator on the right side represents the $t_i$ time sensitivity.

As a modification, it is also possible that the blank BKG is not set in a well plate 12. In this case, the correction value deriver 56 may derive the correction coefficient $k_{corr,i}$ on the basis of a ratio of the measurement value of the blank REF. Specifically, the denominator on the right side of Equation 5 may be set to $y_{blk\,REF,CalibB}$, and the numerator on the right side may be set to $y_{blk\,REF,i}$.

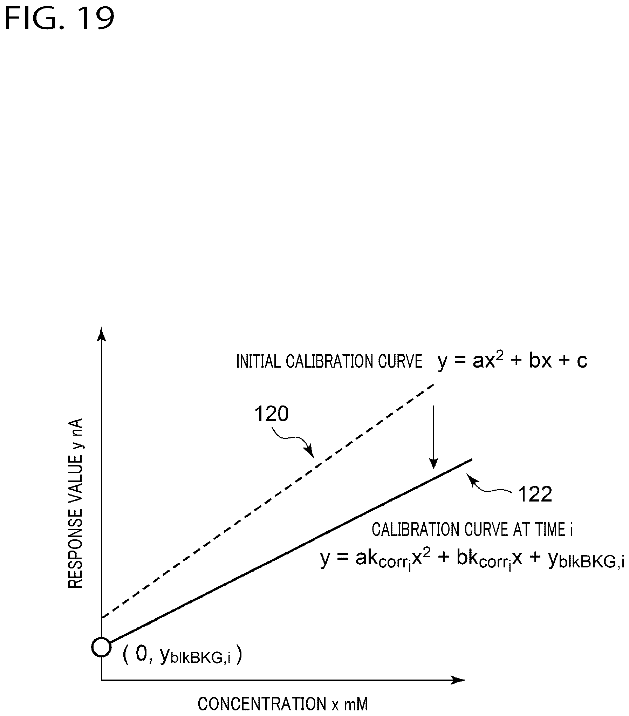

Fig. 19 illustrates an example of the actual measurement time calibration curve. The calibration curve generator 54 generates the actual measurement time calibration curve 122 (that is, the calibration curve at the time $t_i$) by correcting the initial calibration curve 120 on the basis of the correction coefficient $k_{corr,i}$ derived by the correction value deriver 56. In Fig. 19, a case where the initial calibration curve 120 is a quadratic function is illustrated, and the calibration curve generator 54 generates the actual measurement time calibration curve 122 by multiplying a coefficient of the initial calibration curve 120 by the correction coefficient $k_{corr,i}$. For an intercept y, the measured value of the blank BKG at the time $t_i$ may be used, or an origin (0nA, 0mM) may be used in a case where the blank BKG is not set and the like.

Hereinafter, as in the first embodiment, the concentration deriver 58 of the control device 4 derives the glucose concentration in the sample well at the time of the actual measurement using the actual measurement time calibration curve 122. Note that, the correction value deriver 56 derives a new $t_i$ time sensitivity and derives a new correction coefficient $k_{corr,i}$ each time a result of the actual measurement is acquired. The calibration curve generator 54 generates a new actual measurement time calibration curve 122 each time the new correction coefficient $k_{corr,i}$ is derived.

The analysis system 1 of the second embodiment also has an effect similar to that of the analysis system 1 of the first embodiment. For example, according to the analysis system 1 of the second embodiment, it is possible to improve the accuracy of measurement over a long period of time using an electrochemical sensor. Verification in advance of the correction coefficient and the like and acquisition of a value of an explanatory variable become unnecessary.

In the analysis system 1 of the second embodiment, the actual measurement time calibration curve 122 is generated by sequentially updating the initial calibration curve 120 so as to reflect the change in sensitivity of the sensor 16 over time, but in the analysis system 1 of the second embodiment, similarly to the first embodiment, the initial calibration curve 120 is generated using a value corrected so as to reflect the change in sensitivity of the sensor 16 with a lapse of time from the time of calibration A to the time of calibration B. This makes it possible to improve the accuracy of the initial calibration curve 120, and improve the accuracy of the actual measurement time calibration curve 122 based on the initial calibration curve 120.

The present disclosure has been described above on the basis of the second embodiment. The second embodiment is intended to be illustrative only and it will be understood by those skilled in the art that various modifications to combinations of components and processes of the second embodiment are possible and that such modifications are also within the scope of the present disclosure.

A modification of the second embodiment is described. In a case where the value measured in the blank well is an outlier, the calibration curve generator 54 of the control device 4 may generate the actual measurement time calibration curve 122 while excluding the value measured in the blank well. As a difference from the modification of the first embodiment, at the time of recalculating the actual measurement time calibration curve 122, the correction value deriver 56 recalculates the correction coefficient $k_{corr,i}$ while excluding the measurement result by the outlier sensor. The calibration curve generator 54 recalculates the actual measurement time calibration curve 122 using the correction coefficient $k_{corr,i}$ recalculated by the correction value deriver 56.

The above-described processing in a case where a plurality of blank wells corresponding to one sample group is provided is also applicable to the second embodiment. Specifically, the correction value deriver 56 of the calibration curve generator 54 derives a correction value $y^{\wedge}_{smp,CalibA}$ used for generating the initial calibration curve according to Equation 2' described above.

The correction value deriver 56 derives the correction coefficient $k_{corr,i}$ according to Equation 5'.

$$k_{corr,i} = \overline{k_{corr,i,n}}$$
$$= \left( \frac{y_{blkREF,i,n} - \overline{y_{blkBKG,i,m}}}{y_{blkREF,CalibB,n} - \overline{y_{blkBKG,CalibB,m}}} \right) \qquad \cdots \ (\text{Equation 5'})$$

As already described, $X_n$ with overline (bar) means an average value of $X_n$.

<Third Embodiment>

A third embodiment is described focusing on differences from the first embodiment, and common points are not described. It goes without saying that the features of the third embodiment can be optionally combined with the features of other embodiments and the features of the modifications. In the third embodiment, a measured value of a sensor 16 is corrected using a correction coefficient similar to that in the second embodiment so as to reflect a change in sensitivity of the sensor 16 over time.

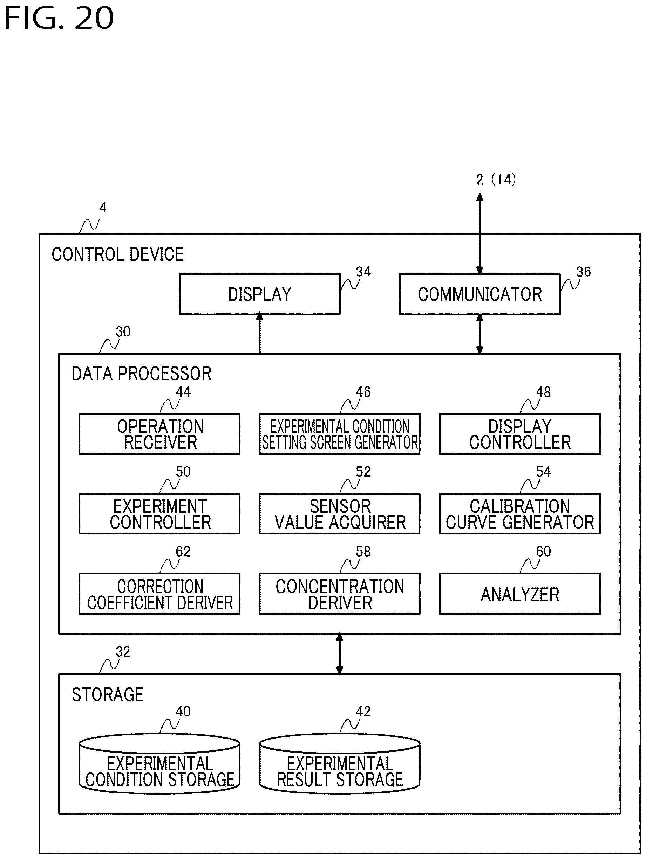

A configuration of an analysis system 1 of the third embodiment is the same as the configuration of the analysis system 1 of the first embodiment illustrated in Fig. 4. Fig. 20 is a block diagram illustrating a functional block of a control device 4 of the third embodiment. The control device 4 of the third embodiment further includes a correction coefficient deriver 62 in addition to the functional block included in the control device 4 of the first embodiment.

The correction coefficient deriver 62 of the control device 4 derives a correction coefficient regarding the change in sensitivity of the sensor 16 with a lapse of time from the time of calibration to the time of actual measurement on the basis of a value measured in a blank well at the time of the calibration and a value measured in the blank well at the time of the actual measurement. Specifically, the correction coefficient deriver 62 derives a correction coefficient $k_{corr,i}$ according to Equation 5 described above.

A concentration deriver 58 of the control device 4 derives a glucose concentration in a sample well at the time of the actual measurement on the basis of an initial calibration curve 120 generated by a calibration curve generator 54 and a value obtained by correcting a value measured in the sample well at the time of the actual measurement on the basis of the correction coefficient $k_{corr,i}$ described in the first embodiment.

Note that, the correction coefficient deriver 62 derives a new correction coefficient $k_{corr,i}$ each time a result of the actual measurement is acquired. The concentration deriver 58 corrects a measured value of the result of the actual measurement with a new correction coefficient $k_{corr,i}$ each time the result of the actual measurement is acquired, and applies the corrected value to the initial calibration curve 120 to derive the glucose concentration.

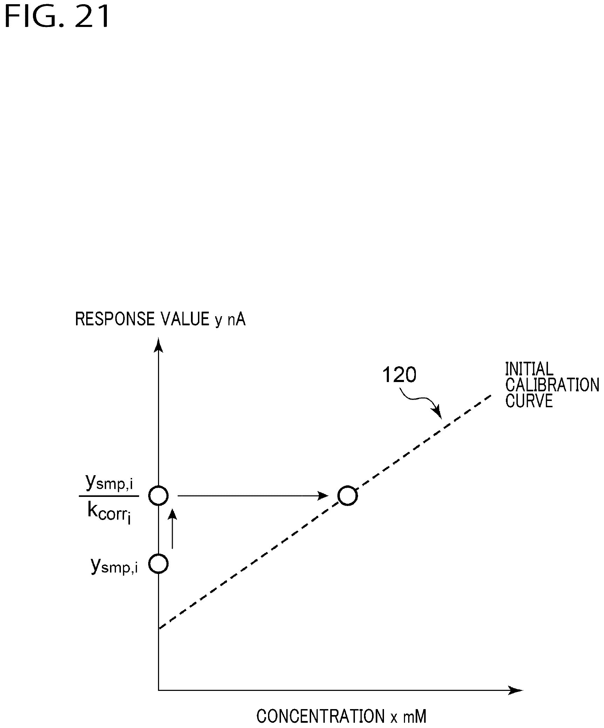

Fig. 21 illustrates an example of deriving the glucose concentration from the measurement value of the sensor 16. The concentration deriver 58 divides a current value $y_{smp,i}$ measured by the sensor 16 in the sample well at the time of the actual measurement by the correction coefficient $k_{corr,i}$ to obtain a correction value ($y_{smp,i}/k_{corr,i}$) of the current value excluding an influence of a change in sensitivity over time of the sensor 16. This correction value can also be said to be a current value obtained in a case where the sensor 16 has initial sensitivity. The concentration deriver 58 derives a concentration corresponding to the correction value ($y_{smp,i}/k_{corr,i}$) of the current value in the initial calibration curve 120 as the glucose concentration in the sample well at the time of the actual measurement.

The analysis system 1 of the third embodiment also has an effect similar to that of the analysis system 1 of the first embodiment. For example, according to the analysis system 1 of the third embodiment, it is possible to improve the accuracy of measurement over a long period of time using an electrochemical sensor. For example, in an example of Fig. 21, the glucose concentration can be obtained with high accuracy while excluding an influence of deterioration in sensitivity of the sensor 16 over time. Verification in advance of the correction coefficient and the like and acquisition of a value of an explanatory variable become unnecessary.

In the analysis system 1 of the third embodiment, a component concentration is derived while applying the correction value of the current value measured by the sensor 16 to the initial calibration curve 120, but in the analysis system 1 of the third embodiment, similarly to the first embodiment, the initial calibration curve 120 is generated using a value corrected so as to reflect the change in sensitivity of the sensor 16 with a lapse of time from the time of calibration A to the time of calibration B. This makes it possible to improve the accuracy of the initial calibration curve 120, and improve the accuracy of the component concentration derived using the initial calibration curve 120.

The present disclosure has been described above on the basis of the third embodiment. The third embodiment is intended to be illustrative only and it will be understood by those skilled in the art that various modifications to combinations of components and processes of the third embodiment are possible and that such modifications are also within the scope of the present disclosure.

A modification of the third embodiment is described. In a case where the value measured in the blank well is an outlier, the correction coefficient deriver 62 of the control device 4 may derive the correction coefficient $k_{corr,i}$ while excluding the value measured in the blank well. Whether the value measured in the blank well is the outlier may be determined by the user, or may be autonomously determined by the control device 4 on the basis of reference data determined in advance as in the modification of the first embodiment.

A difference from the modification of the first embodiment is hereinafter described. In a case where the sensor 16 that measures the blank BKG is the outlier sensor, the calibration curve generator 54 may recalculate the initial calibration curve 120 while setting the current value measured by the blank BKG to 0. The correction coefficient deriver 62 may derive the correction coefficient $k_{corr,i}$ while setting the current value measured by the blank BKG to 0.

In a case where the sensor 16 that measures the blank REF is the outlier sensor, and one or more effective sensors 16 that measure the blank REF remain, the calibration curve generator 54 may recalculate the initial calibration curve 120 using the measurement value of the effective sensor 16 that measures the blank REF while excluding the measurement value of the outlier sensor. Similarly, the correction coefficient deriver 62 may derive the correction coefficient $k_{corr,i}$ using the measurement value of the effective sensor 16 that measures the blank REF while excluding the measurement value of the outlier sensor.

In a case where the sensor 16 that measures the blank REF is the outlier sensor and the number of the effective sensor 16 that measures the blank REF is 0, the correction coefficient deriver 62 may stop deriving the correction coefficient $k_{corr,i}$. The calibration curve generator 54 may generate the initial calibration curve 120 on the basis of a group of the current value measured in the sample well at the time of the calibration A and the glucose concentration, and a group of the current value measured in the sample well at the time of the calibration B and the glucose concentration. The concentration deriver 58 may derive the glucose concentration at the time of the actual measurement using the initial calibration curve 120.

According to this modification, after completion of the entire period of the actual measurement or during the actual measurement, the concentration can be recalculated while setting the sensor in which the abnormality is recognized as the outlier sensor, so that the accuracy of the concentration measurement can be further enhanced.

The above-described processing in a case where a plurality of blank wells corresponding to one sample group is provided is also applicable to the third embodiment. Specifically, the correction value deriver 56 of the calibration curve generator 54 derives a correction value $y^\wedge_{smp,CalibA}$ used for generating the initial calibration curve according to Equation 2' described above. The correction value deriver 56 derives the correction coefficient $k_{corr,i}$ according to Equation 5' described above.

Another modification is described. The present modification is applicable to any of the first to third embodiments described above. In both the calibration A and the calibration B, solutions having the same component concentration may be accommodated in the sample well and the blank well (blank REF in the present modification). For example, the solution accommodated in the sample well and the solution accommodated in the blank REF may have the same glucose concentration and the same lactic acid concentration. The solution may be a culture medium capable of culturing a culture such as a cell.

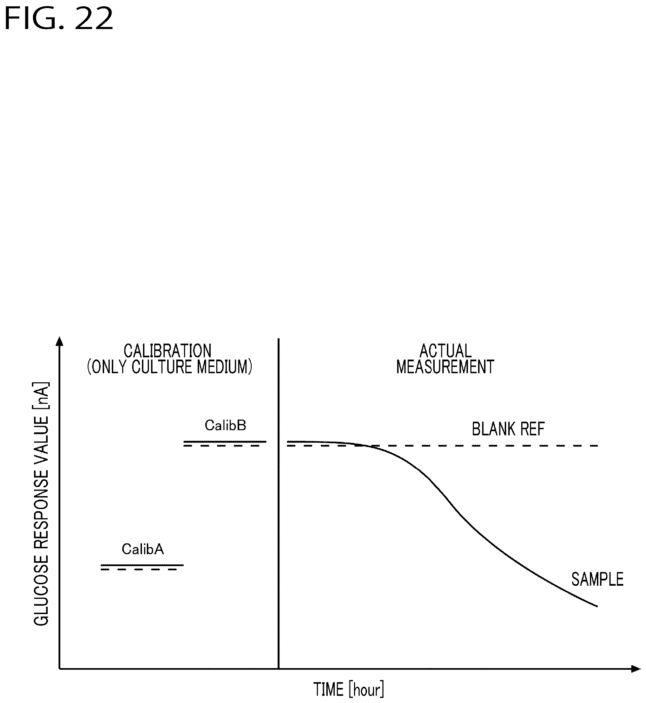

Fig. 22 illustrates an example of transition in time series of a glucose response value. The glucose response value is a current value regarding the glucose concentration in the solution. A solid line graph illustrates the transition of the glucose response value measured in the sample well, and a broken line graph illustrates the transition of the glucose response value measured in the blank REF. At the time of the calibration A and calibration B, the culture such as the cell is not accommodated in either the sample well or the blank REF, and only the culture medium is accommodated. Therefore, the transition of the glucose response value measured in the sample well and the transition of the glucose response value measured in the blank REF are substantially the same.

In the example of Fig. 22, the glucose concentrations of the sample well and the blank REF at the time of the actual measurement are the same as those at the time of the calibration **B.** Since the culture such as the cell is not accommodated in the blank REF, the glucose response value corresponding to the glucose concentration is basically constant. In contrast, since the culture such as the cell is accommodated in the sample well, the glucose response value corresponding to the glucose concentration decreases over time.

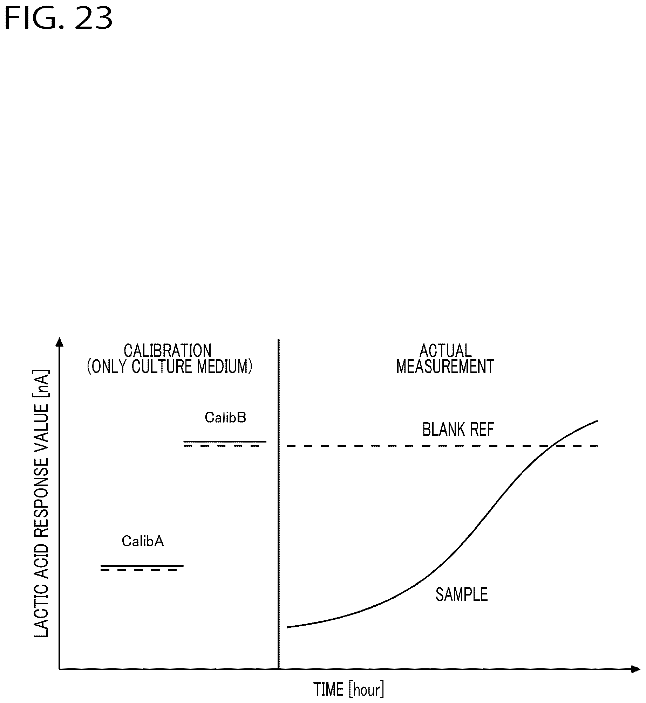

Fig. 23 illustrates an example of transition in time series of a lactic acid response value. The lactic acid response value is a current value regarding the lactic acid concentration in the solution. A solid line graph illustrates the transition of the lactic acid response value measured in the sample well, and a broken line graph illustrates the transition of the lactic acid response value measured in the blank REF. At the time of the calibration A and calibration B, the culture such as the cell is not accommodated in either the sample well or the blank REF, so that the transition of the lactic acid response value measured in the sample well and the transition of the lactic acid response value measured in the blank REF are substantially the same.

At the time of the actual measurement, the lactic acid concentration of the blank REF is the same as that at the time of the calibration B. In contrast, the lactic acid concentration of the sample well is set to be lower than that at the time of the calibration B. Since the culture such as the cell is not accommodated in the blank REF, the lactic acid response value corresponding to the lactic acid concentration is basically constant. In contrast, since the culture such as the cell is accommodated in the sample well, the lactic response value corresponding to the lactic acid concentration increases over time.

In each embodiment described above, the calibration curve and the correction coefficient are sequentially updated on the basis of a behavior of the change in blank well over time so as to reflect the change in sensitivity of the sensor 16 over time. In the present modification, since the sensor 16 of the sample well and the sensor 16 of the blank REF are exposed to the same environment during the calibration, detection accuracy of the component concentration in the sample well at the time of the actual measurement can be further improved. According to the present modification, since solutions having the same component concentration are accommodated in the sample well and the blank REF at the time of the calibration, the type of solution to be adjusted by the user is reduced, and the user's trouble can be reduced. According to the present modification, in a case where a plurality of blank REFs is provided, in a case where an abnormality is detected in the sample well during the calibration, the well for the blank REF can be easily switched to the sample well.

Note that, in the present modification, solutions having the same component concentration are accommodated in the sample well and the blank REF at the time of the calibration, but this "same component concentration" may include a concentration deviation within an allowable range determined in advance.

The detector 2 may include some or all of the plurality of functions of the control device 4 in the first to third embodiments described above. The plurality of functions provided in the control device 4 in the first to third embodiments described above may be implemented while being distributed in a plurality of devices. The plurality of devices may include the control device 4, the detector 2, and a server on a cloud.

Any combination of the embodiments and the modification described above will also be useful as the embodiment of the present disclosure. A new embodiment generated by the combination has effects of each of the combined embodiments and modifications. It will also be understood by those skilled in the art that the functions that the components recited in claims should achieve are implemented either a single component or a combination of the components described in the embodiment and the modifications.

Note that, the embodiment may be specified by items described below.

[Item 1]

An information processing device (4), the device (4) connected to a sensor module (14) in which a plurality of electrochemical sensors (16) each structured to measure a value regarding a concentration of a predetermined component in each of an inspection well (102) and a correction well (102) is integrally formed, the device including:

a sensor value acquirer (52) structured to acquire a value measured by each of the electrochemical sensors (16) in each of the inspection well (102) and the correction well (102) at the time of calibration in which the concentration of the component in the inspection well (102) is known, and acquire a value measured by the electrochemical sensor (16) in each of the inspection well (102) and the correction well (102) at the time of actual measurement in which the concentration of the component in the inspection well (102) is unknown after the calibration;
a calibration curve generator (54) structured to generate, on the basis of the value measured in each of the inspection well (102) and the correction well (102) at the time of the calibration and the value measured in the correction well (102) at the time of the actual measurement, a calibration curve at the time of the actual measurement indicating a relationship between the measured value by the electrochemical sensor (16) and the concentration of the component; and
a concentration deriver (58) structured to derive the concentration of the component in the inspection well (102) at the time of the actual measurement on the basis of the value measured in the inspection well (102) at the time of the actual measurement and the calibration curve at the time of the actual measurement.

[Item 2]

The information processing device (4) according to item 1, in which

the calibration curve generator (54) generates an initial calibration curve on the basis of the value measured in the inspection well (102) at the time of the calibration,
the calibration curve generator (54) derives a correction coefficient regarding a change in sensitivity of the electrochemical sensor (16) with a lapse of time from the time of the calibration to the time of the actual measurement on the basis of the value measured in the correction well (102) at the time of the calibration and the value measured in the correction well (102) at the time of the actual measurement, and
the calibration curve generator (54) generates the calibration curve at the time of the actual measurement by correcting the initial calibration curve on the basis of the correction coefficient.

[Item 3]

The information processing device (4) according to item 2, in which

the calibration curve generator (54) derives, on the basis of a value measured in the correction well (102) at the time of first calibration and a value measured in the correction well (102) at the time of second calibration, a value obtained by correcting the value measured in the inspection well (102) at the time of the first calibration so as to reflect a change in sensitivity of the electrochemical sensor (16) with a lapse of time from the time of the first calibration to the time of the second calibration, and
the calibration curve generator (54) generates the initial calibration curve on the basis of a value measured in the inspection well (102) at the time of the second calibration and the corrected value.

[Item 4]

The information processing device (4) according to item 1, in which

the calibration curve generator (54) derives a first correction value that is a value obtained by correcting a value measured in the inspection well (102) at the time of first calibration so as to reflect a change in sensitivity of the electrochemical sensor (16) with a lapse of time from the time of the first calibration to the time of the actual measurement on the basis of the value measured in the correction well (102) at the time of the calibration and the value measured in the correction well (102) at the time of the actual measurement,

the calibration curve generator (54) derives a second correction value that is a value obtained by correcting the value measured in the inspection well (102) at the time of second calibration so as to reflect a change in sensitivity of the electrochemical sensor (16) with a lapse of time from the time of the second calibration to the time of the actual measurement on the basis of the value measured in the correction well (102) at the time of the calibration and the value measured in the correction well (102) at the time of the actual measurement, and

the calibration curve generator (54) generates the calibration curve at the time of the actual measurement on the basis of the first correction value and the second correction value.

[Item 5]

The information processing device (4) according to item 4, in which

when deriving the first correction value, the calibration curve generator (54) uses a value measured in the correction well (102) at the time of second calibration and the value measured in the correction well (102) at the time of the actual measurement, and

when deriving the second correction value, the calibration curve generator (54) uses a value measured in the correction well (102) at the time of the second calibration and the value measured in the correction well (102) at the time of the actual measurement.

[Item 6]

The information processing device (4) according to item 4, in which

when deriving the first correction value, the calibration curve generator (54) uses a value measured in the correction well (102) at the time of the first calibration and the value measured in the correction well (102) at the time of the actual measurement, and

when deriving the second correction value, the calibration curve generator (54) uses a value measured in the correction well (102) at the time of the second calibration and the value measured in the correction well (102) at the time of the actual measurement.

[Item 7]

The information processing device (4) according to any one of items 1 to 6, in which
in a case where the value measured in the correction well (102) is an outlier, the calibration curve generator (54) generates the calibration curve at the time of the actual measurement while excluding the value measured in the correction well (102).

[Item 8]

An information processing device (4), the device (4) connected to a sensor module in which a plurality of electrochemical sensors (16) each structured to measure a value regarding a concentration of a predetermined component in each of an inspection well (102) and a correction well (102) is integrally formed, the device including:

a sensor value acquirer (52) structured to acquire a value measured by each of the electrochemical sensors (16) in each of the inspection well (102) and the correction well (102) at the time of calibration in which the concentration of the component in the inspection well (102) is known, and acquire a value measured by the electrochemical sensor (16) in each of the inspection well (102) and the correction well (102) at the time of actual measurement in which the concentration of the component in the inspection well (102) is unknown after the calibration;

a calibration curve generator (54) structured to generate, on the basis of the value measured in the inspection well (102) at the time of the calibration, an initial calibration curve indicating a relationship between the measured value by the electrochemical sensor (16) and the concentration of the component;

a correction coefficient deriver (62) structured to derive a correction coefficient regarding a change in sensitivity of the electrochemical sensor (16) with a lapse of time from the time of the calibration to the time of the actual measurement on the basis of the value measured in the correction well (102) at the time of the calibration and the value measured in the correction well (102) at the time of the actual measurement; and

a concentration deriver (58) structured to derive a concentration of the component in the inspection well (102) at the time of the actual measurement on the basis of a value obtained by correcting the value measured in the inspection well (102) at the time of the actual measurement on the basis of the correction coefficient and the initial calibration curve.

[Item 9]

The information processing device (4) according to item 8, in which

the calibration curve generator (54) derives, on the basis of a value measured in the correction well (102) at the time of first calibration and a value measured in the correction well (102) at the time of second calibration, a value obtained by correcting the value measured in the inspection well (102) at the time of the first calibration so as to reflect a change in sensitivity of the electrochemical sensor (16) with a lapse of time from the time of the first calibration to the time of the second calibration, and

the calibration curve generator (54) generates the initial calibration curve on the basis of a value measured in the inspection well (102) at the time of the second calibration and the corrected value.

[Item 10]

The information processing device (4) according to item 8 or 9, in which
in a case where the value measured in the correction well (102) is an outlier, the correction coefficient deriver (62) derives the correction coefficient while excluding the value measured in the correction well (102).

[Item 11]

The information processing device (4) according to item 1 or 8, in which
a solution having the same component concentration is accommodated in the inspection well (102) and the correction well (102) at the time of the calibration.

[Item 12]

An information processing method of a device (4) connected to a sensor module (14) in which a plurality of electrochemical sensors (16) each structured to measure a value regarding a concentration of a predetermined component in each of an inspection well (102) and a correction well (102) is integrally formed, the device executing steps of:

acquiring a value measured by each of the electrochemical sensors (16) in each of the inspection well (102) and the correction well (102) at the time of calibration in which the concentration of the component in the inspection well (102) is known, and acquiring a value measured by the electrochemical sensor (16) in each of the inspection well (102) and the correction well (102) at the time of actual measurement in which the concentration of the component in the inspection well (102) is unknown after the calibration;

generating, on the basis of the value measured in each of the inspection well (102) and the correction well (102) at the time of the calibration and the value measured in the correction well (102) at the time of the actual measurement, a calibration curve at the time of the actual measurement indicating a relationship between the measured value by the electrochemical sensor (16) and the concentration of the component; and

deriving the concentration of the component in the inspection well (102) at the time of the actual measurement on the basis of the value measured in the inspection well (102) at the time of the actual measurement and the calibration curve at the time of the actual measurement.

[Item 13]

An information processing method of a device connected to a sensor module in which a plurality of electrochemical sensors (16) each structured to measure a value regarding a concentration of a predetermined component in each of an inspection well (102) and a correction well (102) is integrally formed, the device executing steps of:

acquiring a value measured by each of the electrochemical sensors (16) in each of the inspection well (102) and the correction well (102) at the time of calibration in which the concentration of the component in the inspection well (102) is known, and acquiring a value measured by the electrochemical sensor (16) in each of the inspection well (102) and the correction well (102) at the time of actual measurement in which the concentration of the component in the inspection well (102) is unknown after the calibration;

generating, on the basis of the value measured in the inspection well (102) at the time of the calibration, an initial calibration curve indicating a relationship between the measured value by the electrochemical sensor (16) and the concentration of the component;

deriving a correction coefficient regarding a change in sensitivity of the electrochemical sensor (16) with a lapse of time from the time of the calibration to the time of the actual measurement on the basis of the value measured in the correction well (102) at the time of the calibration and the value measured in the correction well (102) at the time of the actual measurement; and

deriving a concentration of the component in the inspection well (102) at the time of the actual measurement on the basis of a value obtained by correcting the value measured in the inspection well (102) at the time of the actual measurement on the basis of the correction coefficient and the initial calibration curve.

INDUSTRIAL APPLICABILITY

The technology of the present disclosure can be used for an information processing device, an analysis system and the like.

REFERENCE SIGNS LIST

1 analysis system, 2 detector, 3 incubator, 4 control device, 14 sensor module, 16 sensor, 52 sensor value acquirer, 54 calibration curve generator, 56 correction value deriver, 58 concentration deriver, 62 correction coefficient deriver, 102 well

**Claims**

1. An information processing device, the device connected to a sensor module in which a plurality of electrochemical sensors each structured to measure a value regarding a concentration of a predetermined component in each of an inspection well and a correction well is integrally formed, the device comprising:

a sensor value acquirer structured to acquire a value measured by each of the electrochemical sensors in each of the inspection well and the correction well at the time of calibration in which the concentration of the component in the inspection well is known, and acquire a value measured by the electrochemical sensor in each of the inspection well and the correction well at the time of actual measurement in which the concentration of the component in the inspection well is unknown after the calibration;

a calibration curve generator structured to generate, on the basis of the value measured in each of the inspection well and the correction well at the time of the calibration and the value measured in the correction well at the time of the actual measurement, a calibration curve at the time of the actual measurement indicating a relationship between the measured value by the electrochemical sensor and the concentration of the component; and

a concentration deriver structured to derive the concentration of the component in the inspection well at the time of the actual measurement on the basis of the value measured in the inspection well at the time of the actual measurement and the calibration curve at the time of the actual measurement.

2. The information processing device according to claim **1,** wherein

the calibration curve generator generates an initial calibration curve on the basis of the value measured in the inspection well at the time of the calibration,

the calibration curve generator derives a correction coefficient regarding a change in sensitivity of the electrochemical sensor with a lapse of time from the time of the calibration to the time of the actual measurement on the basis of the value measured in the correction well at the time of the calibration and the value measured in the correction well at the time of the actual measurement, and

the calibration curve generator generates the calibration curve at the time of the actual measurement by correcting the initial calibration curve on the basis of the correction coefficient.

3.  The information processing device according to claim **2,** wherein

the calibration curve generator derives, on the basis of a value measured in the correction well at the time of first calibration and a value measured in the correction well at the time of second calibration, a value obtained by correcting the value measured in the inspection well at the time of the first calibration so as to reflect a change in sensitivity of the electrochemical sensor with a lapse of time from the time of the first calibration to the time of the second calibration, and
the calibration curve generator generates the initial calibration curve on the basis of a value measured in the inspection well at the time of the second calibration and the corrected value.

4.  The information processing device according to claim **1,** wherein

the calibration curve generator derives a first correction value that is a value obtained by correcting a value measured in the inspection well at the time of first calibration so as to reflect a change in sensitivity of the electrochemical sensor with a lapse of time from the time of the first calibration to the time of the actual measurement on the basis of the value measured in the correction well at the time of the calibration and the value measured in the correction well at the time of the actual measurement,
the calibration curve generator derives a second correction value that is a value obtained by correcting the value measured in the inspection well at the time of second calibration so as to reflect a change in sensitivity of the electrochemical sensor with a lapse of time from the time of the second calibration to the time of the actual measurement on the basis of the value measured in the correction well at the time of the calibration and the value measured in the correction well at the time of the actual measurement, and
the calibration curve generator generates the calibration curve at the time of the actual measurement on the basis of the first correction value and the second correction value.

5.  The information processing device according to claim **4,** wherein

when deriving the first correction value, the calibration curve generator uses a value measured in the correction well at the time of the second calibration and the value measured in the correction well at the time of the actual measurement, and
when deriving the second correction value, the calibration curve generator uses the value measured in the correction well at the time of the second calibration and the value measured in the correction well at the time of the actual measurement.

6.  The information processing device according to claim **4,** wherein

when deriving the first correction value, the calibration curve generator uses a value measured in the correction well at the time of the first calibration and the value measured in the correction well at the time of the actual measurement, and
when deriving the second correction value, the calibration curve generator uses a value measured in the correction well at the time of the second calibration and the value measured in the correction well at the time of the actual measurement.

7.  The information processing device according to any one of claims 1 to 6, wherein
in a case where the value measured in the correction well is an outlier, the calibration curve generator generates the calibration curve at the time of the actual measurement while excluding the value measured in the correction well.

8.  An information processing device, the device connected to a sensor module in which a plurality of electrochemical sensors each structured to measure a value regarding a concentration of a predetermined component in each of an inspection well and a correction well is integrally formed, the device comprising:

a sensor value acquirer structured to acquire a value measured by each of the electrochemical sensors in each of the inspection well and the correction well at the time of calibration in which the concentration of the component in the inspection well is known, and acquire a value measured by the electrochemical sensor in each of the inspection well and the correction well at the time of actual measurement in which the concentration of the component in the inspection well is unknown after the calibration;

a calibration curve generator structured to generate, on the basis of the value measured in the inspection well at the time of the calibration, an initial calibration curve indicating a relationship between the measured value by the electrochemical sensor and the concentration of the component;

a correction coefficient deriver structured to derive a correction coefficient regarding a change in sensitivity of the electrochemical sensor with a lapse of time from the time of the calibration to the time of the actual measurement on the basis of the value measured in the correction well at the time of the calibration and the value measured in the correction well at the time of the actual measurement; and

a concentration deriver structured to derive a concentration of the component in the inspection well at the time of the actual measurement on the basis of a value obtained by correcting the value measured in the inspection well at the time of the actual measurement on the basis of the correction coefficient and the initial calibration curve.

9. The information processing device according to claim 8, wherein

the calibration curve generator derives, on the basis of a value measured in the correction well at the time of first calibration and a value measured in the correction well at the time of second calibration, a value obtained by correcting the value measured in the inspection well at the time of the first calibration so as to reflect a change in sensitivity of the electrochemical sensor with a lapse of time from the time of the first calibration to the time of the second calibration, and

the calibration curve generator generates the initial calibration curve on the basis of a value measured in the inspection well at the time of the second calibration and the corrected value.

10. The information processing device according to claim 8 or 9, wherein
in a case where the value measured in the correction well is an outlier, the correction coefficient deriver derives the correction coefficient while excluding the value measured in the correction well.

11. The information processing device according to claim 1 or 8, wherein
a solution having the same component concentration is accommodated in the inspection well and the correction well at the time of the calibration.

12. An information processing method of a device connected to a sensor module in which a plurality of electrochemical sensors each structured to measure a value regarding a concentration of a predetermined component in each of an inspection well and a correction well is integrally formed, the device executing steps of:

acquiring a value measured by each of the electrochemical sensors in each of the inspection well and the correction well at the time of calibration in which the concentration of the component in the inspection well is known, and acquiring a value measured by the electrochemical sensor in each of the inspection well and the correction well at the time of actual measurement in which the concentration of the component in the inspection well is unknown after the calibration;

generating, on the basis of the value measured in each of the inspection well and the correction well at the time of the calibration and the value measured in the correction well at the time of the actual measurement, a calibration curve at the time of the actual measurement indicating a relationship between the measured value by the electrochemical sensor and the concentration of the component; and

deriving the concentration of the component in the inspection well at the time of the actual measurement on the basis of the value measured in the inspection well at the time of the actual measurement and the calibration curve at the time of the actual measurement.

13. An information processing method of a device connected to a sensor module in which a plurality of electrochemical sensors each structured to measure a value regarding a concentration of a predetermined component in each of an inspection well and a correction well is integrally formed, the device executing steps of:

acquiring a value measured by each of the electrochemical sensors in each of the inspection well and the correction well at the time of calibration in which the concentration of the component in the inspection well is known, and acquiring a value measured by the electrochemical sensor in each of the inspection well and the correction well at the time of actual measurement in which the concentration of the component in the inspection well is unknown after the calibration;

generating, on the basis of the value measured in the inspection well at the time of the calibration, an initial calibration curve indicating a relationship between the measured value by the electrochemical sensor and the concentration of the component;

deriving a correction coefficient regarding a change in sensitivity of the electrochemical sensor with a lapse of time from the time of the calibration to the time of the actual measurement on the basis of the value measured in the correction well at the time of the calibration and the value measured in the correction well at the time of the actual measurement; and

deriving a concentration of the component in the inspection well at the time of the actual measurement on the basis of a value obtained by correcting the value measured in the inspection well at the time of the actual measurement on the basis of the correction coefficient and the initial calibration curve.

# FIG. 1

# FIG. 2

# FIG. 3

| CONDITION AFFECTING CHANGE IN SENSITIVITY OVER TIME | EXPLANATION VARIABLE |
|---|---|
| STORAGE PERIOD | MANUFACTURED YEAR, MONTH, AND DATE, MEASURED YEAR, MONTH, AND DATE |
| STORAGE ENVIRONMENT OF SENSOR | STORAGE TEMPERATURE HISTORY |
| MEASUREMENT TIME | DATE AND TIME WHEN STARTING MEASUREMENT, CURRENT DATE AND TIME |
| TEMPERATURE AT TIME OF MEASUREMENT | TEMPERATURE CHARACTERISTIC OF SENSOR, LIQUID TEMPERATURE AT TIME OF MEASUREMENT |
| ENVIRONMENT OF MEASUREMENT INTERRUPTION | TEMPERATURE, TIME IN WHICH VOLTAGE IS NOT APPLIED, DRYING TIME |
| DIFFERENCE BETWEEN LOTS | LOT INFORMATION |
| BUFFER PERFORMANCE OF MEASUREMENT TARGET | CULTURE MEDIUM INFORMATION |
| COMPONENT OF MEASUREMENT TARGET | CULTURE MEDIUM INFORMATION |

FIG. 4

EP 4 582 797 A1

# FIG. 5

FIG. 6

EP 4 582 797 A1

FIG. 7

# FIG. 8

CONTROL DEVICE — 4

2 (14)

DISPLAY — 34

COMMUNICATOR — 36

DATA PROCESSOR — 30

OPERATION RECEIVER — 44

EXPERIMENTAL CONDITION SETTING SCREEN GENERATOR — 46

DISPLAY CONTROLLER — 48

EXPERIMENT CONTROLLER — 50

SENSOR VALUE ACQUIRER — 52

CONCENTRATION DERIVER — 58

CALIBRATION CURVE GENERATOR — 54

CORRECTION VALUE DERIVER — 56

ANALYZER — 60

STORAGE — 32

EXPERIMENTAL CONDITION STORAGE — 40

EXPERIMENTAL RESULT STORAGE — 42

# FIG. 9

110

BLANK A

REFERENCE GLUCOSE CONCENTRATION    10    mM

REFERENCE LACTIC ACID CONCENTRATION    10    mM

Cancel     OK

FIG. 10

EP 4 582 797 A1

# FIG. 11

FIG. 12

EP 4 582 797 A1

# FIG. 13

EP 4 582 797 A1

# FIG. 14

$$y = ax^2 + bx + c$$

120

$( x_{smp,CalibB}, y_{smp,CalibB} )$

$( x_{smp,CalibA}, \hat{y}_{smp,CalibA} )$

$( 0, y_{blkBKG,CalibB} )$

RESPONSE VALUE y nA

CONCENTRATION x mM

# FIG. 15

# FIG. 16

INITIAL CALIBRATION CURVE

120

RESPONSE VALUE y nA

$( x_{smp,CalibB}, \hat{y}_{smp,CalibB} )$

122

$( x_{smp,CalibA}, \hat{y}_{smp,CalibA} )$

$( 0, y_{blkBKG,i} )$

CONCENTRATION x mM

FIG. 17

EP 4 582 797 A1

# FIG. 18

EP 4 582 797 A1

# FIG. 19

RESPONSE VALUE y nA

INITIAL CALIBRATION CURVE  $y = ax^2 + bx + c$

120

122

CALIBRATION CURVE AT TIME i

$y = ak_{corr_i}x^2 + bk_{corr_i}x + y_{blkBKG,i}$

$( 0, y_{blkBKG,i} )$

CONCENTRATION x mM

# FIG. 20

2 (14)

4

**CONTROL DEVICE**

| | 34 | | 36 |
|---|---|---|---|
| | DISPLAY | | COMMUNICATOR |

30

**DATA PROCESSOR**

| 44 | 46 | 48 |
|---|---|---|
| OPERATION RECEIVER | EXPERIMENTAL CONDITION SETTING SCREEN GENERATOR | DISPLAY CONTROLLER |

| 50 | 52 | 54 |
|---|---|---|
| EXPERIMENT CONTROLLER | SENSOR VALUE ACQUIRER | CALIBRATION CURVE GENERATOR |

| 62 | 58 | 60 |
|---|---|---|
| CORRECTION COEFFICIENT DERIVER | CONCENTRATION DERIVER | ANALYZER |

32

**STORAGE**

| 40 | 42 |
|---|---|
| EXPERIMENTAL CONDITION STORAGE | EXPERIMENTAL RESULT STORAGE |

# FIG. 21

RESPONSE VALUE y nA

120

INITIAL
CALIBRATION
CURVE

$$\frac{y_{smp,i}}{k_{corr_i}}$$

$$y_{smp,i}$$

CONCENTRATION x mM

# FIG. 22

# FIG. 23

## INTERNATIONAL SEARCH REPORT

| International application No. |
| --- |
| **PCT/JP2023/036273** |

**A. CLASSIFICATION OF SUBJECT MATTER**

***G01N 27/26***(2006.01)i; ***G01N 27/416***(2006.01)i
FI:  G01N27/26 371A; G01N27/26 381A; G01N27/416 338; G01N27/416 336C

According to International Patent Classification (IPC) or to both national classification and IPC

**B. FIELDS SEARCHED**

Minimum documentation searched (classification system followed by classification symbols)

G01N27/26-27/30; G01N27/416

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2009-162519 A (HORIBA, LTD.) 23 July 2009 (2009-07-23)<br>entire text, all drawings | 1-13 |
| A | WO 2017/010392 A1 (UNIVERSAL BIO RESEARCH CO., LTD.) 19 January 2017 (2017-01-19)<br>entire text, all drawings | 1-13 |
| A | WO 2019/189252 A1 (OSAKA UNIVERSITY) 03 October 2019 (2019-10-03)<br>entire text, all drawings | 1-13 |
| A | JP 2021-189100 A (NATIONAL INSTITUTE FOR MATERIALS SCIENCE) 13 December 2021 (2021-12-13)<br>entire text, all drawings | 1-13 |

☐ Further documents are listed in the continuation of Box C.  ☑ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **14 November 2023** | **28 November 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/036273**

| Patent document cited in search report | | | Publication date (day/month/year) | Patent family member(s) | | | Publication date (day/month/year) |
|---|---|---|---|---|---|---|---|
| JP | 2009-162519 | A | 23 July 2009 | (Family: none) | | | |
| WO | 2017/010392 | A1 | 19 January 2017 | US | 2018/0195986 | A1 | |
| | | | | whole document | | | |
| | | | | EP | 3321669 | A1 | |
| WO | 2019/189252 | A1 | 03 October 2019 | US | 2021/0247357 | A1 | |
| | | | | entire document | | | |
| | | | | EP | 3779424 | A1 | |
| JP | 2021-189100 | A | 13 December 2021 | (Family: none) | | | |

Form PCT/ISA/210 (patent family annex) (January 2015)

**REFERENCES CITED IN THE DESCRIPTION**

**Patent documents cited in the description**

- JP 7110333 A